# EUROPEAN PATENT APPLICATION

(11) **EP 4 503 783 A1**
(43) Date of publication of application: **05.02.2025**
(21) Application number: 22934273.8
(22) Date of filing: 31.03.2022
(51) Int. Cl.: H04W 64/00, H04W 4/02

(54) **SIGNAL PROCESSING METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/084657
(87) International publication number: WO 2023/184436

(57) **Abstract**

The present disclosure relates to the technical field of communications, and provides a signal processing method and apparatus, a device, and a storage medium. The method comprises: obtaining carrier frequency information of at least two carrier frequencies configured by a network device (101a), the carrier frequencies being used for transmitting a positioning signal; obtaining a positioning signal resource corresponding to each carrier frequency configured by the network device (102a); measuring the positioning signal on the basis of the positioning signal resource to obtain a positioning report (103a); and reporting the positioning report (104a). According to the present disclosure, for a multi-carrier frequency scene, a multi-carrier frequency positioning signal configuration method and a measurement report reporting method are provided, such that the technical problems of "how to configure a multi-carrier frequency positioning signal and how to report a measurement report" are solved.

## Description

### TECHNICAL FIELD

The present disclosure relates to the field of communication technologies, and more particularly, to a signal processing method and apparatus, a device and a storage medium.

### BACKGROUND

In a new radio (NR) system, in order to improve the positioning accuracy, a carrier phase-based positioning method is usually used to position a device.

In related technologies, in the event of positioning using a carrier phase-based positioning method, it is usually necessary to measure and report a number of whole cycles of phases of a positioning signal (e.g., an integer part of a quotient between a transmission distance and a carrier frequency wavelength) and a fractional part of phases less than the whole cycle (e.g., a fractional part of the quotient between the transmission distance and the carrier frequency wavelength). In related technologies, a problem exists relating to ambiguity in the number of whole cycles of phases of the positioning signal. In order to solve the problem of ambiguity in the number of whole cycles of phases, the positioning signals are usually sent separately by using a plurality of carrier frequencies having different wavelengths but same transmission distance to solve the problem of ambiguity in the number of whole cycles of phases.

In addition, after a plurality of carrier frequencies is introduced into the NR system in related technologies, the problems relating to configuration of a multi-carrier frequency positioning signal and to reporting of a measurement report needs to be solved.

### SUMMARY

The present disclosure provides a signal processing method and apparatus, a device and a storage medium, in order to solve the technical problems relating to configuration of a multi-carrier frequency positioning signal and to reporting of a measurement report.

Embodiments in an aspect of the present disclosure provide a signal processing method, which is performed by UE for downlink signal processing and includes:
obtaining carrier frequency information of at least two carrier frequencies configured by a network device, wherein the carrier frequency is configured to transmit a positioning signal;
obtaining a positioning signal resource corresponding to each carrier frequency configured by the network device;
measuring the positioning signal based on the positioning signal resource to obtain a positioning report; and
reporting the positioning report.

Embodiments in another aspect of the present disclosure provide a signal processing method, which is performed by a network device for downlink signal processing and includes:
configuring carrier frequency information of at least two carrier frequencies, wherein the carrier frequency is configured to transmit a positioning signal; and
configuring a positioning signal resource corresponding to each carrier frequency;
sending a positioning signal on the positioning signal resource; and
receiving a positioning report sent by UE.

Embodiments in yet another aspect of the present disclosure provide a signal processing apparatus, including:
a first obtaining module, configured to obtain carrier frequency information of at least two carrier frequencies configured by a network device, wherein the carrier frequency is configured to transmit a positioning signal;
a second obtaining module, configured to obtain a positioning signal resource corresponding to each carrier frequency configured by the network device;
a processing module, configured to measure the positioning signal based on the positioning signal resource to obtain a positioning report; and
a reporting module, configured to report the positioning report.

Embodiments in yet another aspect of the present disclosure provides a signal processing apparatus, including:
a first configuring module, configured to configure carrier frequency information of at least two carrier frequencies, wherein the carrier frequency is configured to transmit a positioning signal; and
a second configuring module, configured to configure a positioning signal resource corresponding to each carrier frequency.

Embodiments in yet another aspect of the present disclosure provide a communication device. The communication device includes a processor and a memory, wherein the memory is configured to store a computer program, and the processor is configured to execute the computer program stored in the memory, such that the device performs the method provided by the embodiment in the above aspect.

Embodiments in yet another aspect of the present disclosure provide a communication device. The communication device includes a processor and a memory, wherein the memory is configured to store a computer program, and the processor is configured to execute the computer program stored in the memory, such that the device performs the method provided by the embodiment in the above another aspect.

Embodiments in yet another aspect of the present disclosure provide a communication device, including a processor and an interface circuit, wherein
the interface circuit is configured to receive code instructions and transmit the code instructions to the processor; and
the processor is configured to run the code instructions to perform the method provided by the embodiment in one aspect.

Embodiments in yet another aspect of the present disclosure provides a communication device, including a processor and an interface circuit, wherein
the interface circuit is configured to receive code instructions and transmit the code instructions to the processor; and
the processor is configured to run the code instructions to perform the method provided by the embodiment in another aspect.

Embodiments in yet another aspect of the present disclosure provide a computer-readable storage medium, which is configured to store instructions, which when being executed, cause the method provided by the embodiment in one aspect to be implemented.

Embodiments in yet another aspect of the present disclosure provide a computer-readable storage medium, which is configured to store instructions, which when being executed, cause the method provided by the embodiment in another aspect to be implemented.

In summary, in the signal processing method and apparatus, the device and the storage medium provided by the embodiments of the present disclosure, the UE may obtain carrier frequency information of at least two carrier frequencies configured by the network device, wherein the carrier frequency is configured to transmit a positioning signal; then, the UE may also obtain the positioning signal resource corresponding to each carrier frequency configured by the network device; and further, the UE may measure the positioning signal based on the positioning signal resource to obtain a positioning report and report the positioning report. It can thus be seen that the present disclosure provides a multi-carrier frequency positioning signal configuration method and a measurement report reporting method for a multi-carrier frequency scene, thereby solving the technical problems relating to configuration of a multi-carrier frequency positioning signal and to reporting of a measurement report.

### BRIEF DESCRIPTION OF THE DRAWINGS

The above and/or additional aspects and advantages of the present disclosure will become obvious and easy to understand from the description of the embodiments, in which:
FIGS. 1a-1b are schematic flowcharts of a signal processing method provided by an embodiment of the present disclosure;
FIGS. 2a-2b are schematic flowcharts of a signal processing method provided by another embodiment of the present disclosure;
FIG 3 is a schematic flowchart of a signal processing method provided by yet another embodiment of the present disclosure;
FIGS. 4a-4e are schematic flowcharts of a signal processing method provided by another embodiment of the present disclosure;
FIGS. 5a -5c are schematic flowcharts of a signal processing method provided by an embodiment of the present disclosure;
FIGS. 6a-6b are schematic flowcharts of a signal processing method provided by yet another embodiment of the present disclosure;
FIGS. 7a-7b are schematic flowcharts of a signal processing method provided by another embodiment of the present disclosure;
FIGS. 8a-8b are schematic flowcharts of a signal processing method provided by another embodiment of the present disclosure;
FIGS. 9a-9d are schematic flowcharts of a signal processing method provided by another embodiment of the present disclosure;
FIGS. 10a-10d are schematic flowcharts of a signal processing method provided by another embodiment of the present disclosure;
FIG 11 is a schematic flowchart of a signal processing method provided by another embodiment of the present disclosure;
FIGS. 12a-12b are schematic flowcharts of a signal processing method provided by another embodiment of the present disclosure;
FIG 13 is a schematic flowchart of a signal processing method provided by another embodiment of the present disclosure;
FIG 14 is a schematic flowchart of a signal processing method provided by another embodiment of the present disclosure;
FIG 15 is a schematic flowchart of a signal processing method provided by another embodiment of the present disclosure;
FIGS. 16a-16d are schematic flowcharts of a signal processing method provided by another embodiment of the present disclosure;
FIGS. 17a-17d are schematic flowcharts of a signal processing method provided by another embodiment of the present disclosure;
FIG 18 is a schematic structural diagram of a signal processing apparatus provided by another embodiment of the present disclosure;
FIG 19 is a schematic structural diagram of a signal processing apparatus provided by another embodiment of the present disclosure;
FIG 20 is a block diagram of a terminal device provided by an embodiment of the present disclosure; and
FIG 21 is a block diagram of a network side device provided by an embodiment of the present disclosure.

### DETAILED DESCRIPTION

The exemplary embodiments will be described in detail herein, and examples thereof are shown in the accompanying drawings. When the following description involves the accompanying drawings, unless otherwise indicated, the same numbers in different accompanying drawings indicate the same or similar elements. The implementations described in the following exemplary embodiments are not all the implementations consistent with the embodiments of the present disclosure. On the contrary, these embodiments are examples of apparatuses and methods consistent with some aspects of the present disclosure, as detailed in the appended claims.

The terms used in the embodiments of the present disclosure are for the purpose of describing particular embodiments only and are not intended to limit the embodiments of the present disclosure. The singular forms "a/an" and "the" used in the embodiments and the appended claims of the present disclosure are intended to include the plural forms as well, unless the context clearly indicated otherwise. It should also be understood that the term "and/or" as used herein includes any and all combinations of one or more related listed items.

It should be understood that, although the terms first, second, third, etc. may be used to describe various information in the embodiments of the present disclosure, these should not be limited to these terms. These terms are only used to distinguish information of the same type from each other. For example, "first information" may also be referred to as "second information" without departing from the scope of the embodiments of the present disclosure. Similarly, "second information" may also be referred to as "first information". Depending on the context, the words "in case of" and "if" as used here may be interpreted as "in the event of..." or "when..." or "in response to determining".

A signal processing method and apparatus, a device and a storage medium provided by embodiments of the present disclosure will be described in detail below by reference to the accompanying drawings.

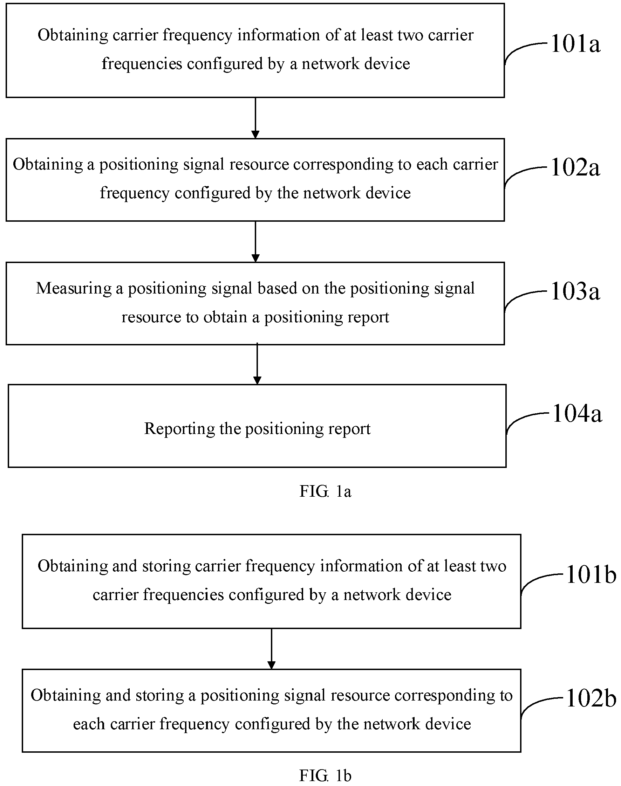

FIG 1a is a schematic flowchart of a signal processing method provided by an embodiment of the present disclosure. The method is performed by user equipment (UE) and may be used for downlink positioning. As shown in FIG 1, the method may include the following steps 101a-104a.

Step 101a: obtaining carrier frequency information of at least two carrier frequencies configured by a network device.

In an embodiment of the present disclosure, the UE may refer to a device that provides voice and/or data connectivity to a user. The terminal device may communicate with one or more core networks via a radio access network (RAN). The UE may be an IoT terminal, such as a sensor device, a mobile phone (or a "cellular" phone) and a computer with an IoT terminal, for example, may be a fixed, portable, pocket-sized, handheld, or a device mounted in a computer or vehicle. For example, the UE may be a station (STA), a subscriber unit, a subscriber station, a mobile station, a mobile, a remote station, an access point, a remote terminal, an access terminal, a user terminal or a user agent. Alternatively, the UE may also be a device for an unmanned aerial vehicle. Alternatively, the UE may also be a vehicular device, for example, may be a trip computer with a wireless communication function, or a wireless terminal connected to an external trip computer. Alternatively, the UE may also be a roadside device, such as a street lamp, a signal lamp or other roadside devices with a wireless communication function.

It should be noted that, in an embodiment of the present disclosure, obtaining carrier frequency information of at least two carrier frequencies configured by the network device may be: obtaining, by the UE, the carrier frequency information of at least two carrier frequencies sent by the network device. In another embodiment of the present disclosure, obtaining carrier frequency information of at least two carrier frequencies configured by the network device may be: reading, by the UE, locally stored carrier frequency information of at least two carrier frequencies previously sent by the network device. That is to say, after the UE obtains the carrier frequency information of at least two carrier frequencies previously sent by the network device, the UE may locally store the carrier frequency information of at least two carrier frequencies, and then may directly read the carrier frequency information of at least two carrier frequencies from the local storage.

In an embodiment of the present disclosure, the network device may include at least one of:
a core network device; and
an access network device.

Also, in an embodiment of the present disclosure, the core network device may be a location management function network element. The location management function network element may include a location server. Also, the location server may be implemented as any of the followings:
location management function (LMF);
enhanced serving mobile location center (E-SMLC);
secure user plane location (SUPL); and
SUPL location platform (SUPL SLP).

Further, in an embodiment of the present disclosure, the access network device may include at least one of the followings:
a base station; and
a transmission-reception point (TRP).

In addition, in an embodiment of the present disclosure, the carrier frequency described above may be configured to transmit a positioning signal, and the positioning signal may be configured to implement carrier phase-based positioning. Also, the positioning signal may be a downlink positioning signal. Specifically, the positioning signal may be a position reference signal (PRS), or a new reference signal for downlink positioning.

Also, in an embodiment of the present disclosure, the carrier frequency information may include at least one of the followings:
an ID (Identity, serial number) of each carrier frequency;
a carrier frequency combination ID corresponding to at least two carrier frequencies;
a starting frequency point position of each carrier frequency; and
an end frequency point position of each carrier frequency.

Step 102a: obtaining a positioning signal resource corresponding to each carrier frequency configured by the network device.

In an embodiment of the present disclosure, obtaining the positioning signal resource corresponding to each carrier frequency configured by the network device may be: obtaining, by the UE, the positioning signal resource corresponding to each carrier frequency sent by the network device. In another embodiment of the present disclosure, obtaining the positioning signal resource corresponding to each carrier frequency configured by the network device may be: reading, by the UE, a locally stored positioning signal resource corresponding to each carrier frequency previously configured by the network device. That is to say, after obtaining the positioning signal resource corresponding to each carrier frequency previously sent by the network device, the UE may locally store the positioning signal resource corresponding to each carrier frequency, and then may directly read the positioning signal resource corresponding to each carrier frequency from the local storage.

Also, in an embodiment of the present disclosure, the UE may specifically obtain the positioning signal resource corresponding to each carrier frequency by obtaining parameter information of the positioning signal resource corresponding to each carrier frequency configured by the network device. The parameter information may include at least one of the followings:
a positioning signal resource ID;
a positioning signal resource set ID;
TRP ID;
transmission cycle;
slot offset;
a number of repeated transmissions within one cycle;
a time interval between every two repeated transmissions;
a number of symbols occupied;
muting pattern;
comb-size;
starting symbol position;
sub-carrier spacing (SCS);
quasi-colocation (QCL) information;
a number of samples measured;
carrier frequency bandwidth; and
starting physical resource block (PRB) position.

Step 103a: measuring a positioning signal based on the positioning signal resource to obtain a positioning report.

In an embodiment of the present disclosure, the UE may receive the positioning signal sent by the network device (e.g., an access network device) on the positioning signal resources on at least two carrier frequencies based on the positioning signal resources and the carrier frequency information of at least two carrier frequencies, and measure the received positioning signal to obtain a positioning report.

In an embodiment of the present disclosure, the positioning report may include at least one of the followings:
a number of whole cycles of phases;
a fractional part of phases less than the whole cycle;
phase error group information when the UE receives the positioning signal, the phase error group information including an ID of a phase error group and/or an error value corresponding to the phase error group;
reference signal receiving power (RSRP);
angle of arrival (AoA);
angle of departure (AoD);
time of arrival (ToA);
time difference of arrival (TDoA);
round trip time (RTT);
Rx time error group (RxTEG);
Tx time error group (TxTEG); and
Tx Rx time error group (TxRxTEG).

In addition, the above-mentioned content about "measuring a measurement signal" will be described in detail in the subsequent embodiments.

In addition, it should also be noted that, in an embodiment of the present disclosure, the positioning report obtained in the above step 103 may be one or more copies.

Specifically, in an embodiment of the present disclosure, at least two carrier frequencies may be aggregated together to transmit the same positioning signal, or independently transmit different positioning signals. If at least two carrier frequencies are aggregated to transmit the same positioning signal, one positioning report may be obtained by measuring the positioning signal on at least two carrier frequencies. If at least two carrier frequencies are configured to transmit different positioning signals independently, a plurality of positioning reports is obtained by measuring the positioning signals on the respective carrier frequencies separately.

Step 104a: reporting the positioning report.

In an embodiment of the present disclosure, after obtaining the positioning report, the UE may report the positioning report to the network device (e.g., the core network device), so that the core network device may position the UE based on the positioning report.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain the positioning signal resource corresponding to each carrier frequency configured by the network device; and the UE may measure the positioning signal based on the positioning signal resource to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

FIG 1b is a schematic flowchart of a signal processing method provided by an embodiment of the present disclosure. The method is performed by UE and may be used for downlink positioning. As shown in FIG 1b, the method may include the following steps 101b-102b.

Step 101b: obtaining and storing carrier frequency information of at least two carrier frequencies configured by a network device.

Step 102b: obtaining and storing a positioning signal resource corresponding to each carrier frequency configured by the network device.

With respect to other detailed introduction of steps 101b-102b, reference may be made to the description of the above embodiments, which will not be repeated here in the embodiments of the present disclosure.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain the positioning signal resource corresponding to each carrier frequency configured by the network device; and the UE may measure the positioning signal based on the positioning signal resource to obtain the positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

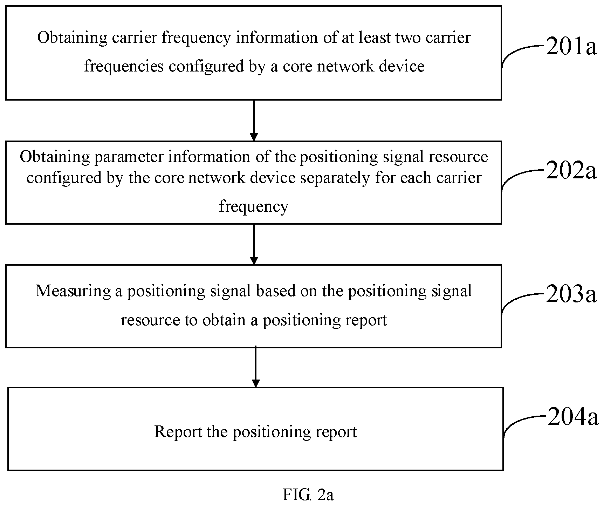

FIG 2a is a schematic flowchart of a signal processing method provided by an embodiment of the present disclosure. The method is performed by UE and may be used for downlink positioning. As shown in FIG 2a, the method may include the following steps 201a-204a.

Step 201a: obtaining carrier frequency information of at least two carrier frequencies configured by a core network device.

In an embodiment of the present disclosure, obtaining the carrier frequency information of at least two carrier frequencies configured by the core network device may be: obtaining, by the UE, carrier frequency information of the at least two carrier frequencies sent by the core network device. In another embodiment of the present disclosure, obtaining the carrier frequency information of at least two carrier frequencies configured by the core network device may be: reading, by the UE, locally stored carrier frequency information of at least two carrier frequencies previously configured by the core network device. That is to say, after the UE obtains the carrier frequency information of at least two carrier frequencies previously sent by the core network device, the UE may locally store the carrier frequency information of at least two carrier frequencies, and then may directly read the carrier frequency information of at least two carrier frequencies from the local storage.

Step 202a: obtaining parameter information of positioning signal resources configured by the core network device independently for each carrier frequency.

That is to say, in an embodiment of the present disclosure, the core network device may configure parameter information of a set of positioning signal resources independently for each carrier frequency.

In an embodiment of the present disclosure, the parameter information of the positioning signal resources independently configured corresponding to each carrier frequency may be the same. In another embodiment of the present disclosure, the parameter information of the positioning signal resources independently configured corresponding to each carrier frequency may be different.

Also, in an embodiment of the present disclosure, obtaining the positioning signal resource corresponding to each carrier frequency configured by the core network device may be: obtaining, by the UE, a positioning signal resource corresponding to at least each carrier frequency sent by the core network device. In another embodiment of the present disclosure, obtaining the positioning signal resource corresponding to each carrier frequency configured by the core network device may be: reading, by the UE, a locally stored positioning signal resource corresponding to each carrier frequency previously configured by the core network device. That is to say, after obtaining the positioning signal resource corresponding to each carrier frequency previously sent by the core network device, the UE may locally store the positioning signal resource corresponding to each carrier frequency, and then may directly read the positioning signal resource corresponding to each carrier frequency from the local storage.

Step 203a: measuring a positioning signal based on the positioning signal resource to obtain a positioning report.

Step 204a: reporting the positioning report.

With respect to other detailed introduction of steps 201a-204a, reference may be made to the description of the above embodiments, which will not be repeated here in the embodiments of the present disclosure.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain the positioning signal resource corresponding to each carrier frequency configured by the network device; and the UE may measure the positioning signal based on the positioning signal resource to obtain the positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

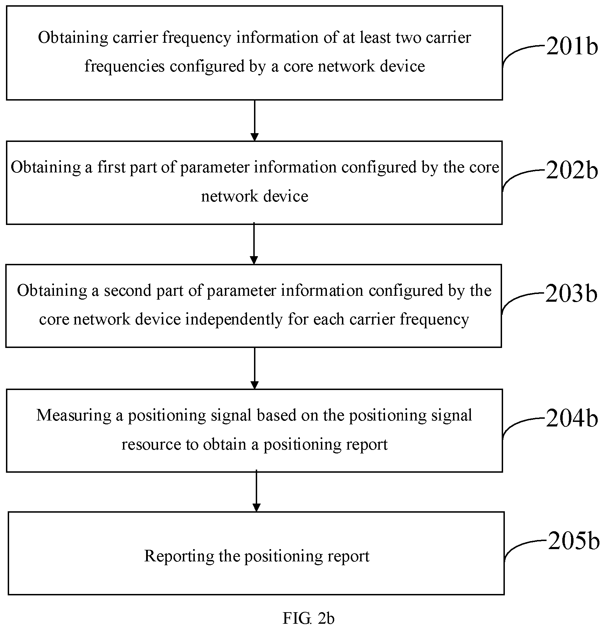

FIG 2b is a schematic flowchart of a signal processing method provided by an embodiment of the present disclosure. The method is performed by UE and may be used for downlink positioning. As shown in FIG 2b, the method may include the following steps 201b-205b.

Step 201b: obtaining carrier frequency information of at least two carrier frequencies configured by a core network device.

Step 202b: obtaining a first part of parameter information configured by the core network device.

In an embodiment of the present disclosure, the first part of parameter information corresponding to each carrier frequency is the same. That is, the first part of parameter information may be common to each carrier frequency. In other words, in an embodiment of the present disclosure, the core network device may configure a first part of parameter information of a set of positioning signal resources for all carrier frequencies.

For example, in an embodiment of the present disclosure, the first part of parameter information includes a part of the following parameter information of the positioning signal resources:
a positioning signal resource ID;
a positioning signal resource set ID;
TRP ID;
transmission cycle;
slot offset;
a number of repeated transmissions within one cycle;
a time interval between every two repeated transmissions;
a number of symbols occupied;
muting pattern;
comb-size;
starting symbol position;
SCS;
QCL information;
a number of samples measured;
carrier frequency bandwidth; and
starting PRB position.

For example, in an embodiment of the present disclosure, the first part of parameter information may include, for example, the transmission cycle, the number of symbols occupied, etc.

Also, in an embodiment of the present disclosure, obtaining the first part of parameter information configured by the core network device may be: obtaining, by the UE, the first part of parameter information sent by the core network device. In another embodiment of the present disclosure, obtaining the first part of parameter information configured by the core network device may be: reading, by the UE, a locally stored first part of parameter information previously configured by the core network device. That is, after the UE obtains the first part of parameter information previously sent by the core network device, the UE may locally store the first part of parameter information, and then may directly read the first part of parameter information from the local storage.

Step 203b: obtaining a second part of parameter information independently configured by the core network device for each carrier frequency.

That is, in an embodiment of the present disclosure, the core network device may configure the second part of parameter information of a set of positioning signal resources independently for each carrier frequency.

In an embodiment of the present disclosure, the second part of parameter information may be parameter information other than the first part of parameter information in the parameter information of the positioning signal resources.

Also, in an embodiment of the present disclosure, the second part of parameter information corresponding to each carrier frequency may be the same. In another embodiment of the present disclosure, the second part of parameter information corresponding to each carrier frequency may be different.

Also, in an embodiment of the present disclosure, obtaining the second part of parameter information configured by the core network device may be: obtaining, by the UE, the second part of parameter information sent by the core network device. In another embodiment of the present disclosure, obtaining the second part of parameter information configured by the core network device may be: reading, by the UE, a locally stored second part of parameter information previously configured by the core network device. That is, after the UE obtains the second part of parameter information previously sent by the core network device, the UE may locally store the second part of parameter information, and then may directly read the second part of parameter information from the local storage.

Step 204b: measuring a positioning signal based on the positioning signal resource to obtain a positioning report.

Step 205b: reporting the positioning report.

With respect to other detailed introduction of steps 201b-205b, reference may be made to the description of the above embodiments, which will not be repeated here in the embodiments of the present disclosure.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

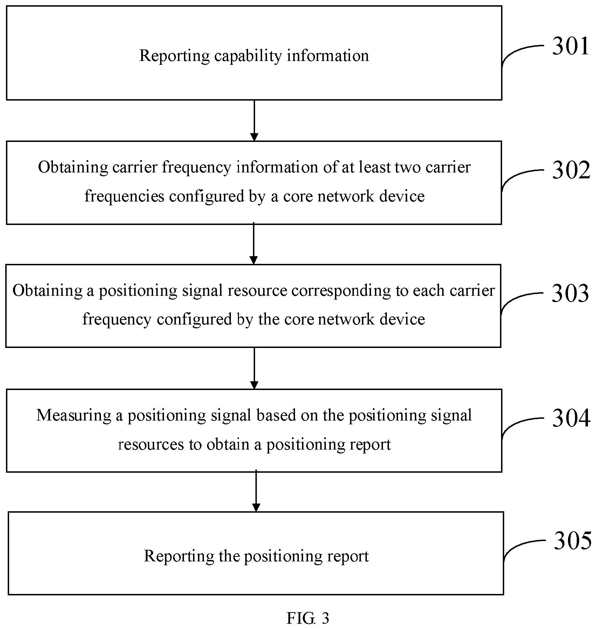

FIG 3 is a schematic flowchart of a signal processing method provided by an embodiment of the present disclosure. The method is performed by UE and may be used for downlink positioning. As shown in FIG 3, the method may include the following steps 301-305.

Step 301: reporting capability information.

In an embodiment of the present disclosure, the capability information may be configured to indicate whether the UE supports simultaneous reception of positioning signals on a plurality of carrier frequencies.

Also, in an embodiment of the present disclosure, the UE may report the capability information to at least one of the core network device and the access network device. Therefore, the core network device may configure the carrier frequency information of at least two carrier frequencies and the positioning signal resource corresponding to each carrier frequency to the UE based on the capability information, and/or the access network device may send positioning signals to the UE simultaneously and/or non-simultaneously based on the capability information.

Step 302: obtaining carrier frequency information of at least two carrier frequencies configured by the core network device.

Step 303: obtaining the positioning signal resource corresponding to each carrier frequency configured by the core network device.

In an embodiment of the present disclosure, when the capability information indicates that the UE supports simultaneous reception of positioning signals on the plurality of carrier frequencies, the core network device may configure positioning signal resources in the same time domain and/or different time domains on each carrier frequency, so that the positioning signals on the plurality of carrier frequencies may be transmitted simultaneously or non-simultaneously.

In another embodiment of the present disclosure, when the capability information indicates that the UE does not support simultaneous reception of positioning signals on the plurality of carrier frequencies, the core network device can only configure positioning signal resources in different time domains on each carrier frequency, so that the positioning signals on the plurality of carrier frequencies may be transmitted non-simultaneously.

Step 304: measuring a positioning signal based on the positioning signal resource to obtain a positioning report.

In an embodiment of the present disclosure, the UE may receive the positioning signal sent by the network device (e.g., an access network device) on the positioning signal resources on at least two carrier frequencies based on the positioning signal resources and the carrier frequency information of at least two carrier frequencies, and measure the received positioning signal to obtain the positioning report.

It should be noted that in an embodiment of the present disclosure, when the capability information indicates that the UE supports simultaneous reception of positioning signals on the plurality of carrier frequencies, the core network device may configure positioning signal resources in the same time domain and/or different time domains on each carrier frequency, and the UE needs to receive positioning signals simultaneously and/or non-simultaneously on the positioning signal resources of at least two carrier frequencies. In another embodiment of the present disclosure, when the capability information indicates that the UE does not support simultaneous reception of positioning signals on the plurality of carrier frequencies, the core network device can only configure positioning signal resources in different time domains on each carrier frequency, and the UE only needs to receive positioning signals non-simultaneously on the positioning signal resources on at least two carrier frequencies.

Step 305: reporting the positioning report.

With respect to other detailed description of steps 301-305, reference may be made to the description of the above embodiments, which will not be repeated here in the embodiments of the present disclosure.

It should be noted that in an embodiment of the present disclosure, the above step 301 is optional. Specifically, in an embodiment of the present disclosure, the UE may report the capability information by performing the above step 301 while performing downlink positioning. In addition, if the capability of "whether the UE supports simultaneous transmission of positioning signals on the plurality of carrier frequencies" does not change while subsequently performing downlink positioning again, the UE may not perform the above step 301 (i.e., the UE will no longer report the capability information). If the capability of "whether the UE supports simultaneous transmission of positioning signals on the plurality of carrier frequencies" has changed, the UE may perform the above step 301 (i.e., the UE needs to update and report the capability information).

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

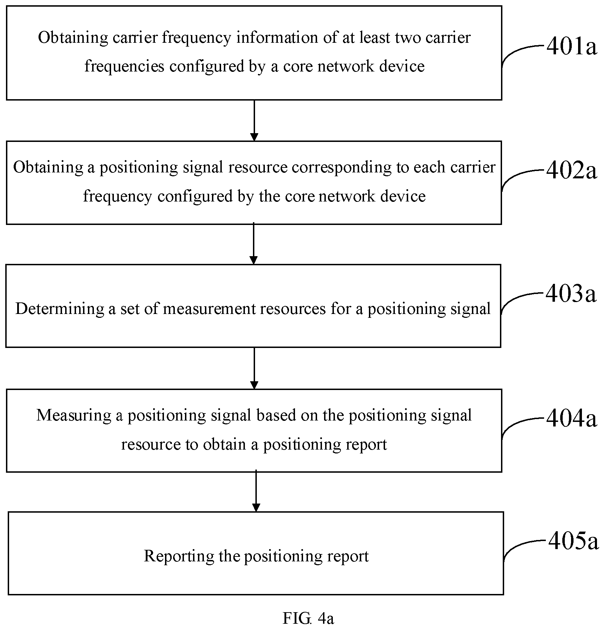

FIG 4a is a schematic flowchart of a signal processing method provided by an embodiment of the present disclosure. The method is performed by UE and may be used for downlink positioning. As shown in FIG 4a, the method may include the following steps 401a-405a.

Step 401a: obtaining carrier frequency information of at least two carrier frequencies configured by a core network device.

Step 402a: obtaining a positioning signal resource corresponding to each carrier frequency configured by the core network device.

Step 403a: determining a set of measurement resources for a positioning signal.

In an embodiment of the present disclosure, the measurement resources for the positioning signal may be specifically used for the UE to measure the positioning signal. Further, the measurement resource may include a measurement gap and/or a positioning signal processing window.

Specifically, in an embodiment of the present disclosure, the measurement gap may specifically include a gap cycle (e.g., the gap cycle may be 20/40/80/160 ms (milliseconds), etc). Each gap cycle may correspond to one gap duration. One gap duration may have a length of 1 ms, 1.5 ms, 2 ms, 2.5 ms, 3 ms, 3.5 ms, 4 ms, 4.5 ms, 5 ms, 5.5 ms, 6 ms, etc. The UE may receive and measure the positioning signal within the gap duration that occurs periodically.

In another embodiment of the present disclosure, the positioning signal processing window may specifically include a window cycle. Each window cycle may correspond to one window duration. The UE may receive and measure positioning signals within the window duration that occurs periodically.

Also, in an embodiment of the present disclosure, a method for determining a set of measurement resources for a positioning signal may include at least one of methods a and b.

Method a: obtaining a set of measurement resources configured by the network device (e.g., the access network device), and determining the configured set of measurement resources as measurement resources for the positioning signal.

In other words, if the network device only configures one set of measurement resources to the UE, the UE may directly determine the configured set of measurement resources as measurement resources for the positioning signal.

In an embodiment of the present disclosure, the network device may configure measurement resources to the UE through a radio resource control (RRC) signaling.

Method b: obtaining a plurality of sets of measurement resources configured by the network device (e.g., the access network device), activate one set of measurement resources in the plurality of sets of measurement resources based on a signaling sent by the network device, and determine the activated set of measurement resources as measurement resources for the positioning signal.

That is to say, in an embodiment of the present disclosure, the access network device may configure a plurality of sets of measurement resources to the UE, but the access network device activates only one set of measurement resources, and then the UE may determine the activated set of measurement resources as measurement resources for the positioning signal.

In an embodiment of the present disclosure, the access network device may specifically activate the measurement resources through a medium access control-control element (MAC CE) signaling.

Step 404a: measuring a positioning signal based on the positioning signal resource to obtain a positioning report.

In an embodiment of the present disclosure, when the measurement resources in the above step 403a are different, the specific measurement process of measuring the positioning signal in step 403a may also be different. The content of this part will be described in detail in the subsequent embodiments.

Step 405a: reporting the positioning report.

With respect to other detailed description of steps 401a-405a, reference may be made to the description of the above embodiments, which will not be repeated here in the embodiments of the present disclosure.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

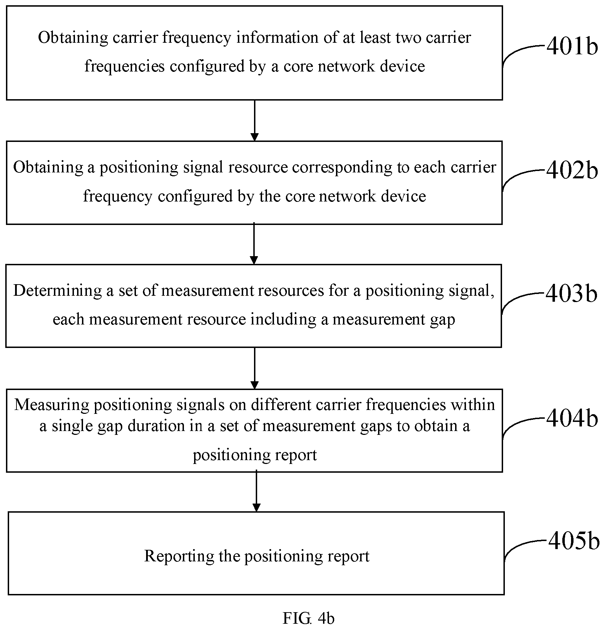

FIG 4b is a schematic flowchart of a signal processing method provided by an embodiment of the present disclosure. The method is performed by UE and may be used for downlink positioning. As shown in FIG 4b, the method may include the following steps 401b-405b.

Step 401b: obtaining carrier frequency information of at least two carrier frequencies configured by a core network device.

Step 402b: obtaining a positioning signal resource corresponding to each carrier frequency configured by the core network device.

Step 403b: determining a set of measurement resources for a positioning signal, each measurement resource including a measurement gap.

Step 404b: measuring positioning signals on different carrier frequencies within a single gap duration in a set of measurement gaps to obtain a positioning report.

In an embodiment of the present disclosure, when the UE only determines one set of measurement resources for the positioning signal, and each measurement resource is a measurement gap, the UE may receive the positioning signal within each gap duration in the set of measurement gaps, but not other downlink signals. The other downlink signals may include at least one of the followings:
physical downlink control channel (PDCCH);
physical downlink shared channel (PDSCH);
channel state information reference signal (CSI-RS);
physical broadcast channel (PBCH); and
synchronization signal block (SSB).

Also, in an embodiment of the present disclosure, measuring positioning signals on different carrier frequencies within one gap duration in the set of measurement gaps may be understood as: assuming that the core network device configures carrier frequency information of two carrier frequencies to the UE, wherein the two carrier frequencies are a carrier frequency #1 and a carrier frequency #2, respectively. The UE may receive and measure the positioning signal on the carrier frequency #1 within a first half of one gap duration, and receive and measure the positioning signal on the carrier frequency #2 within a second half. For example, if the cycle of this set of measurement gaps is 40 ms and the gap duration is 6 ms, the first gap duration is within t0 to t0+6 ms, while the second gap duration is within t0+40 ms to t0+46 ms. Then, the UE may measure the positioning signals on the carrier frequency #1 and the carrier frequency #2 within t0 to t0+6 ms, e.g., measure the positioning signal on the carrier frequency #1 within t0 to t0+3 ms, and measure the positioning signal on the carrier frequency #2 within t0+3 ms to t0+6 ms. Alternatively, the UE may measure the positioning signals on the carrier frequency #1 and the carrier frequency #2 within t0+40 ms to t0+46 ms, e.g., measure the positioning signal on the carrier frequency #1 within t0+40 ms to t0+43 ms, and measure the positioning signal on the carrier frequency #2 within t0+43 ms to t0+46 ms.

Step 405b: reporting the positioning report.

With respect to other detailed description of steps 401b-405b,y reference may be made to the description of the above embodiments, which will not be repeated here in the embodiments of the present disclosure.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

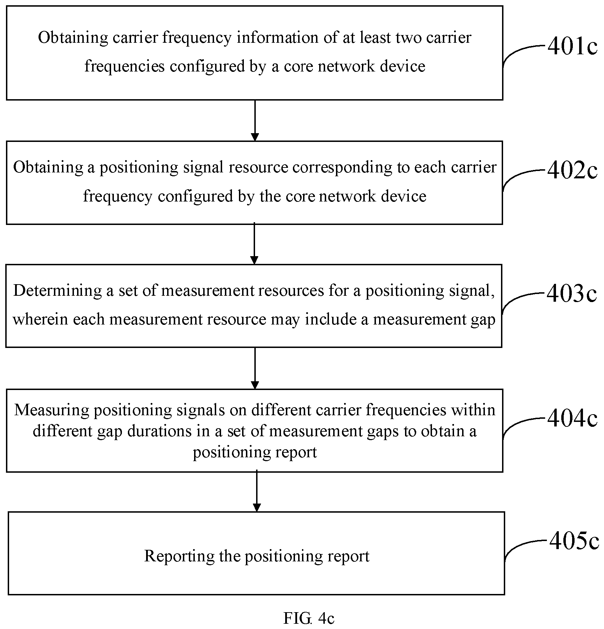

FIG 4c is a schematic flowchart of a signal processing method provided by an embodiment of the present disclosure. The method is performed by UE and may be used for downlink positioning. As shown in FIG 4c, the method may include the following steps 401c-405c.

Step 401c: obtaining carrier frequency information of at least two carrier frequencies configured by a core network device.

Step 402c: obtaining a positioning signal resource corresponding to each carrier frequency configured by the core network device.

Step 403c: determining a set of measurement resources for a positioning signal, wherein each measurement resource may include a measurement gap.

Step 404c: measuring positioning signals on different carrier frequencies within different gap durations in a set of measurement gaps to obtain a positioning report.

In an embodiment of the present disclosure, when the UE only determines one set of measurement resources for the positioning signal, and the measurement resource is MG, the UE may receive the positioning signal within each gap duration in the set of measurement gaps, but not other downlink signals. The other downlink signals may include at least one of the followings:
PDCCH;
PDSCH;
CSI-RS;
PBCH; and
SSB.

In an embodiment of the present disclosure, measuring positioning signals on different carrier frequencies within different gap durations in the set of measurement gaps may be understood as: assuming that the core network device configures carrier frequency information of two carrier frequencies to the UE, wherein the two carrier frequencies are a carrier frequency #1 and a carrier frequency #2, respectively. The UE may receive and measure the positioning signal on the carrier frequency #1 within a first gap duration, and receive and measure the positioning signal on the carrier frequency #2 within a second gap duration. For example, if the cycle of this set of measurement gaps is 40 ms and the gap duration is 6 ms, the first gap duration is within t0 to t0+6 ms, while the second gap duration is within t0+40 ms to t0+46 ms. Then, the UE may measure the positioning signal on the carrier frequency #1 within t0 to t0+6 ms. The positioning signal on the carrier frequency #2 is measured within T0+40 ms to T0+46 ms.

Step 405c: reporting the positioning report.

With respect to other detailed description of steps 401c-405c, reference may be made to the description of the above embodiments, which will not be repeated here in the embodiments of the present disclosure.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

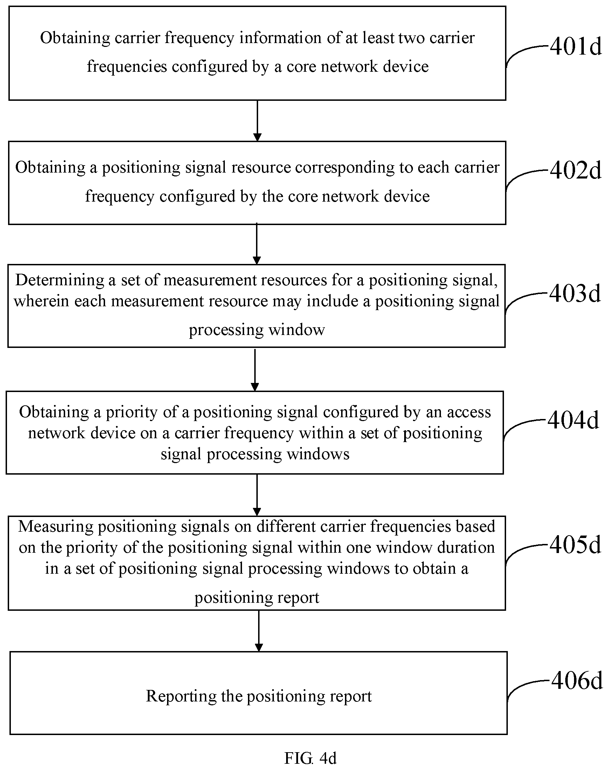

FIG 4d is a schematic flowchart of a signal processing method provided by an embodiment of the present disclosure. The method is performed by UE and may be used for downlink positioning. As shown in FIG 4d, the method may include the following steps 401d-406d.

Step 401d: obtaining carrier frequency information of at least two carrier frequencies configured by a core network device.

Step 402d: obtaining a positioning signal resource corresponding to each carrier frequency configured by the core network device.

Step 403d: determining a set of measurement resources for a positioning signal, wherein each measurement resource may include a positioning signal processing window.

Step 404d: obtaining a priority of the positioning signal on each carrier frequency within a set of positioning signal processing windows configured by the access network device.

It should be noted that in an embodiment of the present disclosure, for a window duration of the positioning signal processing window, the UE may receive not only the positioning signal, but also other downlink signals. The other downlink signals may include, for example, a first downlink signal and a second downlink signal. The first downlink signal may be a downlink signal corresponding to a non-ultra reliable and low latency communication (URLLC). This second downlink signal may be a downlink signal corresponding to the URLLC. In addition, the downlink signal may specifically include at least one of PDCCH, PDSCH, CSI-RS, PBCH, and SSB.

Further, in an embodiment of the present disclosure, the downlink signal corresponding to the URLLC and the downlink signal corresponding to the non-URLLC may be determined based on a priority of hybrid automatic retransmission request acknowledgement (HARQ-ACK) of the downlink signal. Specifically, when the HARQ-ACK priority of a downlink signal is high, the downlink signal is determined to be the downlink signal corresponding to the URLLC; and when the HARQ-ACK priority of a downlink signal is low, the downlink signal is determined to be the downlink signal corresponding to the non-URLLC.

Also, based on the above description, the UE may receive not only the positioning signal but also other downlink signals within the window duration of the positioning signal processing window. Therefore, the priority of the positioning signal needs to be configured for the positioning signal processing window, so that the UE may subsequently process the positioning signal, the first downlink signal and the second downlink signal based on this priority.

The priority of the positioning signal includes at least one of the followings:
the priority of the positioning signal being higher than that of the first downlink signal and the second downlink signal;
the priority of the positioning signal being higher than that of the first downlink signal but lower than that of the second downlink signal; and
the priority of the positioning signal being lower than that of the first downlink signal and the second downlink signal.

Further, it should be noted that in an embodiment of the present disclosure, a set of positioning signal processing windows may be correspondingly configured with at least one priority. When a set of positioning signal processing windows is correspondingly configured with one priority, then in each window duration in the set of positioning signal processing windows, the signal is processed based on this priority. When a set of positioning signal processing windows is correspondingly configured with a plurality of priorities, the access network device should also configure a correspondence relationship between the plurality of priorities and a plurality of carrier frequencies, wherein the corresponding priorities of the positioning signals on different carrier frequencies are the same or different; and when the UE subsequently processes signals within the window duration in the positioning signal processing window, the corresponding priority may be used to process the signal on each carrier frequency based on the correspondence relationship between the priorities and the carrier frequencies.

Step 405d: measuring positioning signals on different carrier frequencies based on the priority of the positioning signal within one window duration in a set of positioning signal processing windows to obtain a positioning report.

It should be noted that in an embodiment of the present disclosure, when a set of positioning signal processing windows configured by the access network device in the above step 403d corresponds to one priority of the positioning signal, the UE may measure positioning signals on different carrier frequencies based on the one priority of the positioning signal within one window duration in the set of positioning signal processing windows.

For example, in an embodiment of the present disclosure, it is assumed that the access network device in step 403d configures one priority of the positioning signal, i.e., priority #1: the priority of the positioning signal is higher than that of the first downlink signal and the second downlink signal. In addition, the core network device configures two carrier frequencies to the UE, which are carrier frequency #1 and carrier frequency #2, respectively. The UE may receive and measure the positioning signal on the carrier frequency #1 based on the priority #1 within a first half of one window duration in the positioning signal processing window, and receive and measure the positioning signal on the carrier frequency #2 based on the priority #1 within a second half. For example, the cycle of this set of positioning signal processing windows is 80 ms, and the window length is 10 ms, the first window duration is within t0 to t0+10 ms, while the second window duration is within t0+80 ms to t0+90 ms. Then, the UE may measure the positioning signals on the carrier frequency #1 and the carrier frequency #2 within t0 to t0+10 ms, e.g., measure the positioning signal on the carrier frequency #1 within t0 to t0+5 ms, and measure the positioning signal on the carrier frequency #2 within t0+5 ms to t0+10 ms. Alternatively, the UE may measure the positioning signals on the carrier frequency #1 and the carrier frequency #2 within t0+80 ms to t0+90 ms, e.g., measure the positioning signal on the carrier frequency #1 within t0+80 ms to t0+85 ms, and measure the positioning signal on the carrier frequency #2 within t0+85 ms to t0+90 ms.

In another embodiment of the present disclosure, when a set of positioning signal processing windows configured by the access network device in the above step 403d corresponds to a plurality of priorities of positioning signals, and a correspondence relationship between a plurality of priorities and carrier frequencies is configured, the UE may measure positioning signals on different carrier frequencies based on the corresponding priorities of different carrier frequencies within a window duration in the set of positioning signal processing windows.

For example, in an embodiment of the present disclosure, it is assumed that the access network device in step 403d is configured with two priorities of positioning signals, i.e., a priority #1: the priority of the positioning signal is higher than that of the first downlink signal and the second downlink signal; and a priority #2: the priority of the positioning signal is higher than that of the first downlink signal and lower than that of the second downlink signal, and the core network device configures two carrier frequencies to the UE, which are a carrier frequency #1 and a carrier frequency #2, respectively. The priority #1 corresponds to the carrier frequency #1, and the priority #2 corresponds to the carrier frequency #2. If there is no second downlink signal in this window, the UE may receive and measure the positioning signal on the carrier frequency #1 based on the priority #1 within a first half of a window duration in the positioning signal processing window, and receive and measure the positioning signal on the carrier frequency #2 based on the priority #2 within the second half. For example, the cycle of this set of positioning signal processing windows is 80 ms, and the window length is 10 ms, the first window duration is within t0 to t0+10 ms, while the second window duration is within t0+80 ms to t0+90 ms. Then, the UE may measure the positioning signals on the carrier frequency #1 and the carrier frequency #2 within t0 to t0+10 ms, e.g., measure the positioning signal on the carrier frequency #1 within t0 to t0+5 ms, and measure the positioning signal on the carrier frequency #2 within t0+5 ms to t0+10 ms. Alternatively, the UE may measure the positioning signals on the carrier frequency #1 and the carrier frequency #2 within t0+80 ms to t0+90 ms, e.g., measure the positioning signal on the carrier frequency #1 within t0+80 ms to t0+85 ms, and measure the positioning signal on the carrier frequency #2 within t0+85 ms to t0+90 ms. If there is a second downlink signal in this window, because the positioning signal in the priority #1 corresponding to the carrier frequency #1 has a priority higher than that of the first downlink signal and the second downlink signal, the UE may preferentially receive and measure the positioning signal on the carrier frequency #1 based on the priority #1 within this window duration in the positioning signal processing window. However, since the positioning signal in the priority #2 corresponding to the carrier frequency #2 has a priority higher than that of the first downlink signal and lower than that of the second downlink signal, the UE may not receive and measure the positioning signal on the carrier frequency #2 within this window duration in the positioning signal processing window based on the presence of the second downlink signal in the window, because the positioning signal corresponding to the carrier frequency #2 has a priority lower than that of the second downlink signal.

Step 406d: reporting the positioning report.

With respect to other detailed description of steps 401d-406d, reference may be made to the description of the above embodiments, which will not be repeated here in the embodiments of the present disclosure.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

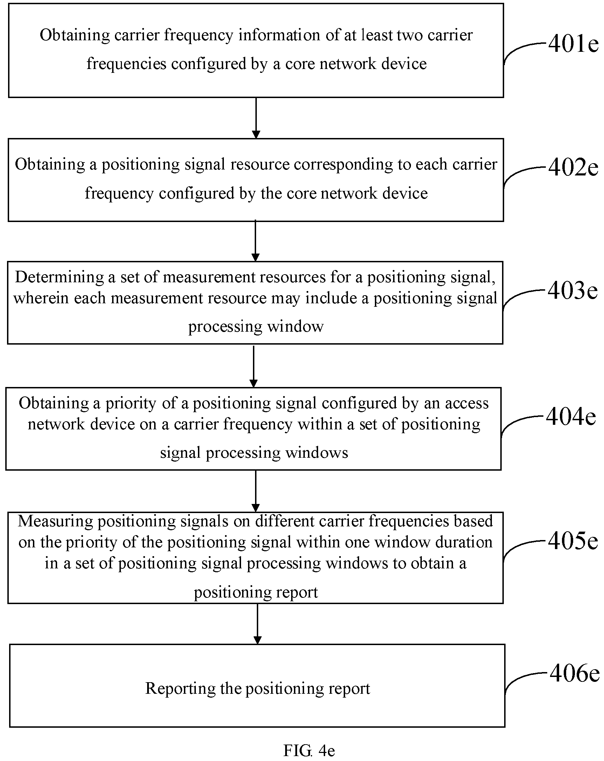

FIG 4e is a schematic flowchart of a signal processing method provided by an embodiment of the present disclosure. The method is performed by UE and may be used for downlink positioning. As shown in FIG 4e, the method may include the following steps 401e-406e.

Step 401e: obtaining carrier frequency information of at least two carrier frequencies configured by a core network device.

Step 402e: obtaining a positioning signal resource corresponding to each carrier frequency configured by the core network device.

Step 403e: determining a set of measurement resources for a positioning signal, wherein each measurement resource may include a positioning signal processing window.

Step 404e: obtaining a priority of the positioning signal on each carrier frequency within a set of positioning signal processing windows configured by the access network device.

It should be noted that in an embodiment of the present disclosure, for a window duration in the positioning signal processing window, the UE may receive not only the positioning signal, but also other downlink signals. The other downlink signals may include, for example, a first downlink signal and a second downlink signal. The first downlink signal may be a downlink signal corresponding to non-URLLC. This second downlink signal may be a downlink signal corresponding to the URLLC. In addition, the downlink signal may specifically include at least one of PDCCH, PDSCH, CSI-RS, PBCH, and SSB.

Further, in an embodiment of the present disclosure, the downlink signal corresponding to the URLLC and the downlink signal corresponding to the non-URLLC may be determined based on a priority of HARQ-ACK of the downlink signal. Specifically, when the HARQ-ACK priority of a downlink signal is high, the downlink signal is determined to be the downlink signal corresponding to the URLLC; and when the HARQ-ACK priority of a downlink signal is low, the downlink signal is determined to be the downlink signal corresponding to the non-URLLC.

Also, based on the above description, the UE may receive not only the positioning signal but also other downlink signals within the window duration of the positioning signal processing window. Therefore, the priority of the positioning signal needs to be configured for the positioning signal processing window, so that the UE may subsequently process the positioning signal, the first downlink signal and the second downlink signal based on this priority.

The priority of the positioning signal includes at least one of the followings:
the priority of the positioning signal being higher than that of the first downlink signal and the second downlink signal;
the priority of the positioning signal being higher than that of the first downlink signal but lower than that of the second downlink signal; and
the priority of the positioning signal being lower than that of the first downlink signal and the second downlink signal.

In addition, it should be noted that in an embodiment of the present disclosure, a set of positioning signal processing windows may be configured with at least one priority. When a set of positioning signal processing windows is correspondingly configured with one priority, in each window duration in the set of positioning signal processing windows, the signal is processed based on this priority. When a set of positioning signal processing windows is correspondingly configured with a plurality of priorities, the access network device should also configure a correspondence relationship between the plurality of priorities and a plurality of carrier frequencies, wherein the corresponding priorities of the positioning signals on different carrier frequencies are the same or different; and when the UE subsequently processes signals within the window duration in the positioning signal processing window, the corresponding priority may be used to process the signal on each carrier frequency based on the correspondence relationship between the priorities and the carrier frequencies.

Step 405e: measuring positioning signals on different carrier frequencies based on the priorities of the positioning signals within different window durations in a set of positioning signal processing windows to obtain a positioning report.

It should be noted that in an embodiment of the present disclosure, when a set of positioning signal processing windows configured by the access network device in the above step 403e corresponds to one priority of the positioning signal, the UE may measure the positioning signals on different carrier frequencies based on one priority of the positioning signals within different window durations in the set of positioning signal processing windows.

For example, in an embodiment of the present disclosure, it is assumed that the access network device in step 403e is configured with one priority for the positioning signal, i.e., a priority #1: the priority of the positioning signal is higher than that of the first downlink signal and the second downlink signal, and the core network device configures two carrier frequencies for the UE, which are a carrier frequency #1 and a carrier frequency #2, respectively. The UE may receive and measure the positioning signal on the carrier frequency #1 based on the priority #1 within a first window duration, and receive and measure the positioning signal on the carrier frequency #2 based on the priority #1 within a second window duration. For example, the cycle of this set of positioning signal processing windows is 80 ms, and the window length is 10 ms, the first window duration is within t0 to t0+10 ms, while the second window duration is within t0+80 ms to t0+90 ms. Then, the UE may measure the positioning signal on the carrier frequency #1 within t0 to t0+10 ms. The positioning signal on the carrier frequency #2 is measured within T0+80 ms to T0+90 ms.

In another embodiment of the present disclosure, when a set of positioning signal processing windows configured by the access network device in the above step 403e corresponds to a plurality of priorities of positioning signals, and a correspondence relationship between the plurality of priorities and carrier frequencies is configured, the UE may measure positioning signals on different carrier frequencies based on the priorities corresponding to different carrier frequencies within different window durations in the set of positioning signal processing windows.

For example, in an embodiment of the present disclosure, it is assumed that the access network device configures two priorities of positioning signals in step 403e, i.e., a priority #1: the priority of the positioning signal is higher than that of the first downlink signal and the second downlink signal; and a priority #2: the priority of the positioning signal is higher than that of the first downlink signal and lower than that of the second downlink signal, and the core network device configures two carrier frequencies to the UE, which are a carrier frequency #1 and a carrier frequency #2, respectively. The priority #1 corresponds to the carrier frequency #1, and the priority #2 corresponds to the carrier frequency #2. If there is no second downlink signal within the second window, the UE may receive and measure the positioning signal on the carrier frequency #1 based on the priority #1 within a first window, and receive and measure the positioning signal on the carrier frequency #2 based on the priority #2 within the second window. For example, the cycle of this set of positioning signal processing windows is 80 ms, and the window length is 10 ms, the first window duration is within t0 to t0+10 ms, while the second window duration is within t0+80 ms to t0+90 ms. If there is no second downlink signal within the second window duration, the UE may measure the positioning signal on the carrier frequency #1 within t0 to t0+10 ms. The positioning signal on the carrier frequency #2 is measured within T0+80 ms to T0+90 ms. If there is a second downlink signal within all windows, the UE may only receive and measure the positioning signal on the carrier frequency #1 based on the priority #1 within any window duration in the positioning signal processing windows.

Step 406e: reporting the positioning report.

With respect to other detailed description of steps 401e-406e, reference may be made to the description of the above embodiments, which will not be repeated here in the embodiments of the present disclosure.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

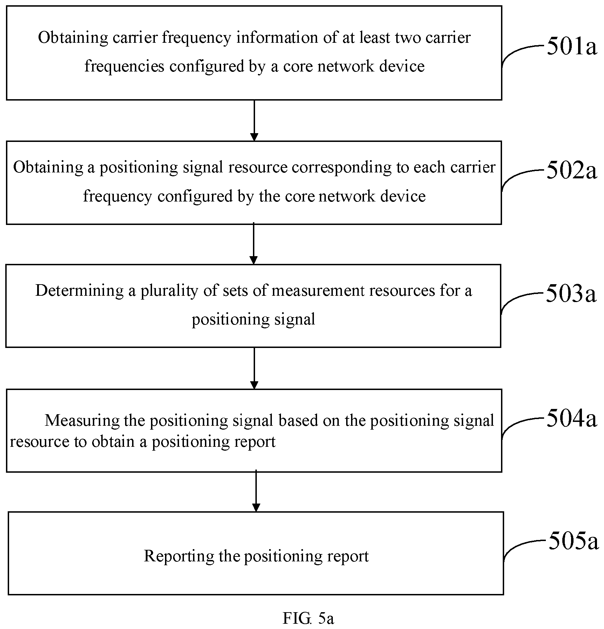

FIG 5a is a schematic flowchart of a signal processing method provided by an embodiment of the present disclosure. The method is performed by UE and may be used for downlink positioning. As shown in FIG 5a, the method may include the following steps 501a-505a.

Step 501a: obtaining carrier frequency information of at least two carrier frequencies configured by a core network device.

Step 502a: obtaining a positioning signal resource corresponding to each carrier frequency configured by the core network device.

Step 503a: determining a plurality of sets of measurement resources for a positioning signal.

With respect to other related description about measurement resources, reference may be made to the description of the above embodiments, which will not be repeated here in the embodiments of the present disclosure.

Also, in an embodiment of the present disclosure, a method for determining a plurality of sets of measurement resources for a positioning signal may include at least one of methods A and B.

Method A: obtaining a plurality of sets of measurement resources configured by a network device (e.g., an access network device) and directly determining the plurality of sets of configured measurement resources as the plurality of sets of measurement resources for the positioning signal.

In other words, if the network device configures a plurality of sets of measurement resources to the UE, the UE may directly determine the plurality of sets of configured measurement resources as the measurement resources for the positioning signal.

In an embodiment of the present disclosure, the network device may configure measurement resources to UE through an RRC signaling.

Method B: obtaining M sets of measurement resources configured by the network device (e.g., the access network device), and activating N sets of measurement resources in the M sets of measurement resources based on the signaling sent by the network device, wherein M and N are integers greater than 1 and M is greater than N.

That is to say, in an embodiment of the present disclosure, if the access network device configures M sets of measurement resources to the UE, but the access network device activates only N sets of measurement resources in the M sets of measurement resources, the UE may determine the activated N sets of measurement resources as the measurement resources for the positioning signal.

In an embodiment of the present disclosure, the access network device may activate the measurement resources through the MAC CE signaling.

It should be noted that, in an embodiment of the present disclosure, the number of sets of measurement resources determined in the present step 504a may be the same as or different from the number of carrier frequencies.

Step 505a: measuring a positioning signal based on the positioning signal resource to obtain a positioning report.

In an embodiment of the present disclosure, the plurality of sets of measurement resources may correspond to different carrier frequencies respectively. When the UE measures the positioning signal based on the positioning signal resource, signals on the positioning signal resources on the corresponding carrier frequencies may be measured based on the measurement resources.

It should be noted that in an embodiment of the present disclosure, the types of measurement resources corresponding to different carrier frequencies may be the same. For example, the measurement resources corresponding to different carrier frequencies may be measurement gaps or may be positioning signal processing windows. In another embodiment of the present disclosure, the types of measurement resources corresponding to different carrier frequencies may be different. For example, the measurement resource configured for a first part of the carrier frequencies in at least two carrier frequencies may be the measurement gap, and the measurement resource configured for a second part of the carrier frequencies may be the positioning signal processing window.

Alternatively, in another embodiment of the present disclosure, both the measurement gap and the positioning signal processing window may be configured for one carrier frequency.

Step 505a: reporting the positioning report.

With respect to other detailed description of steps 501a-505a, reference may be made to the description of the above embodiments, which will not be repeated here in the embodiments of the present disclosure.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

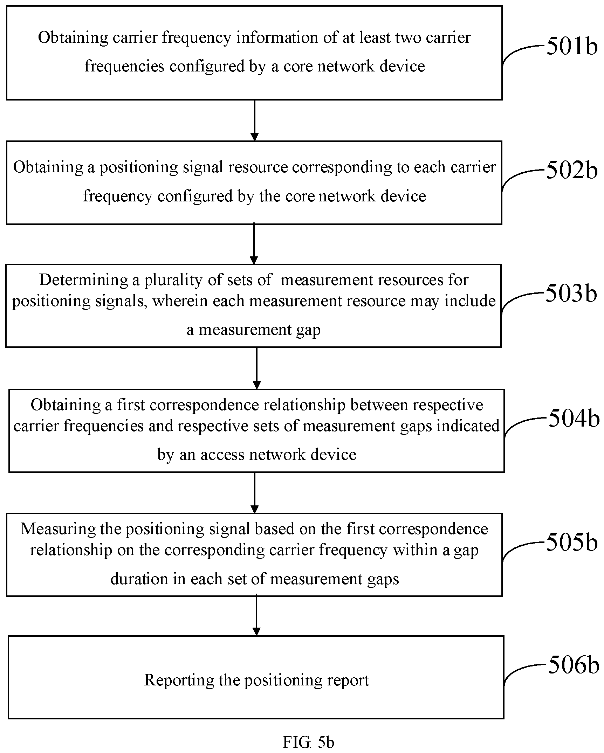

FIG 5b is a schematic flowchart of a signal processing method provided by an embodiment of the present disclosure. The method is performed by UE and may be used for downlink positioning. As shown in FIG 5b, the method may include the following steps 501b-506b.

Step 501b: obtaining carrier frequency information of at least two carrier frequencies configured by a core network device.

Step 502b: obtaining a positioning signal resource corresponding to each carrier frequency configured by the core network device.

Step 503b: determining a plurality of sets of measurement resources for a positioning signal, wherein each measurement resource may include a measurement gap.

Step 504b: obtaining a first correspondence relationship between respective carrier frequencies and respective sets of measurement gaps indicated by an access network device.

For example, in an embodiment of the present disclosure, assuming that the core network device in the above step 501b configures two carrier frequencies, which are respectively a carrier frequency #1 and a carrier frequency #2, and that two sets of measurement gaps are determined in step 503b, which are respectively a measurement gap #1 and a measurement gap #2, the first correspondence relationship may be as follows: the carrier frequency #1 corresponds to the measurement gap #1, and the carrier frequency #2 corresponds to the measurement gap #2. The measurement gap #1 corresponds to a cycle #1, a slot offset value #1 and a gap duration #1; and the measurement gap #2 corresponds to a cycle #2, a slot offset value #2 and a gap duration #2. The cycle #1 and the cycle #2 may be the same or different. The slot offset value #1 and the slot offset value #2 may be the same or different. When the cycle #1 and the cycle #2 are the same, the slot offset value #1 and the slot offset value #2 may be different. The gap duration #1 and the gap duration #2 may be the same or different.

Step 505b: measuring the positioning signal on the corresponding carrier frequency within a gap duration in each set of measurement gaps based on the first correspondence relationship.

For example, in an embodiment of the present disclosure, measuring the positioning signal on the corresponding carrier frequency within a gap duration in each set of measurement gaps based on the first correspondence relationship may be understood as: assuming that the first correspondence relationship indicated by the access network device in step 504b is as follows: the carrier frequency #1 corresponds to the measurement gap #1, and the carrier frequency #2 corresponds to the measurement gap #2, then the UE may receive and measure the positioning signal on the carrier frequency #1 within each gap duration in the measurement gap #1, and receive and measure the positioning signal on the carrier frequency #2 within each gap duration in the measurement gap #2.

Step 506b: reporting the positioning report.

With respect to other detailed introduction of steps 501b-506b, reference may be made to the description of the above embodiments, which will not be repeated here in the embodiments of the present disclosure.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

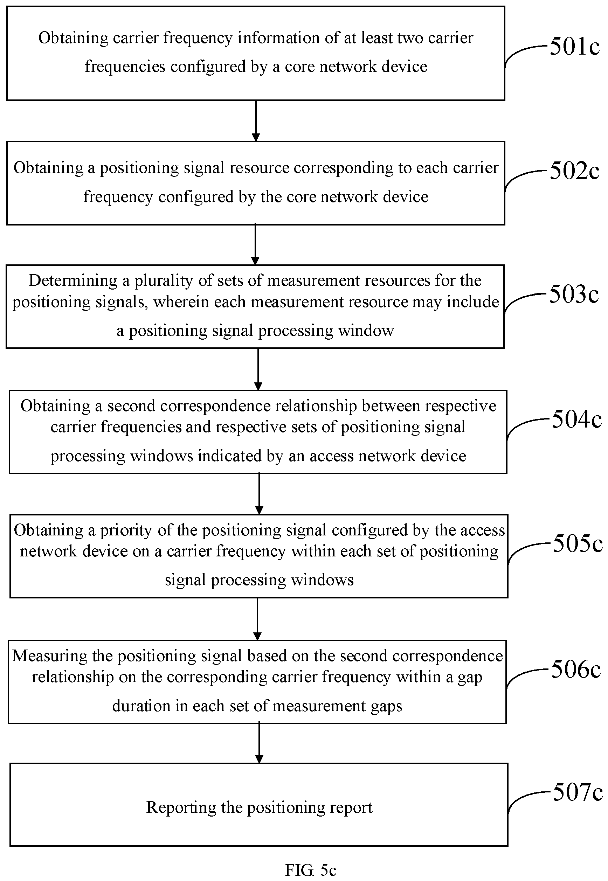

FIG 5c is a schematic flowchart of a signal processing method provided by an embodiment of the present disclosure. The method is performed by UE and may be used for downlink positioning. As shown in FIG 5c, the method may include the following steps 501c-507c.

Step 501c: obtaining carrier frequency information of at least two carrier frequencies configured by a core network device.

Step 502c: obtaining a positioning signal resource corresponding to each carrier frequency configured by the core network device.

Step 503c: determining a plurality of sets of measurement resources for a positioning signal, wherein each measurement resource may include a positioning signal processing window.

Step 504c: obtaining a second correspondence relationship between respective carrier frequencies and respective sets of positioning signal processing windows indicated by an access network device.

For example, in an embodiment of the present disclosure, assuming that the core network device in the above step 501b configures two carrier frequencies, which are respectively a carrier frequency #1 and a carrier frequency #2, and that two sets of positioning signal processing windows are determined in step 503b, which are respectively a positioning signal processing window #1 and a positioning signal processing window #2, the second correspondence relationship may be as follows: the carrier frequency #1 corresponds to the positioning signal processing window #1, and the carrier frequency #2 corresponds to the positioning signal processing window #2.

Step 505c: obtaining a priority of the positioning signal on each carrier frequency within each set of positioning signal processing windows configured by the access network device.

With respect to the detailed introduction for the priority, reference may be made to the description of the above embodiments, which will not be repeated here in the embodiments of the present disclosure.

Also, in an embodiment of the present disclosure, the priorities of the positioning signal for different sets of positioning signal processing windows may be the same. In an embodiment of the present disclosure, the priorities of the positioning signal for different sets of positioning signal processing windows may be different.

For example, in an embodiment of the present disclosure, assuming that the access network device configures two sets of positioning signal processing windows to the UE, which are respectively a positioning signal processing window #1 and a positioning signal processing window #2, the priority of the positioning signal received by the UE on each carrier frequency within each set of positioning signal processing windows configured by the access network device may be as follows: the positioning signal processing window #1 corresponds to a priority #1, and the positioning signal processing window #2 corresponds to a priority #2.

Step 506c: measuring the positioning signal on the corresponding carrier frequency within a window duration in each set of measurement positioning signal processing windows based on the second correspondence relationship and the priority of the positioning signal corresponding to each set of positioning signal processing windows.

For example, in an embodiment of the present disclosure, the second correspondence relationship is assumed as follows: the carrier frequency #1 corresponds to the positioning signal processing window #1, the carrier frequency #2 corresponds to the positioning signal processing window #2, the positioning signal processing window #1 corresponds to the priority #1, and the positioning signal processing window #2 corresponds to the priority #2. The UE may receive and measure the positioning signal on the carrier frequency #1 based on the priority #1 within each window duration in the positioning signal processing window #1, and receive and measure the positioning signal on the carrier frequency #2 based on the priority #2 within each window duration in the positioning signal processing window #2. The positioning signal processing window #1 corresponds to a cycle #1, a starting slot value #1, a window duration #1 and a priority #1, wherein the priority #1 refers that the positioning signal has a priority higher than that of all other downlink signals. The positioning signal processing window #2 corresponds to a cycle #2, a starting slot value #2, a window duration #2 and a priority #2, wherein the priority #2 refers that the positioning signal has a priority higher than that of a downlink signal corresponding to non-URLLC and lower than that of a downlink signal corresponding to URLLC. The cycle #1 and the cycle #2 may be the same or different. The starting slot value #1 and the starting slot value #2 may be the same or different. When the cycle #1 and the cycle #2 are the same, the starting slot value #1 and the starting slot value #2 cannot be the same. The window duration #1 and the window duration #2 may be the same or different. The UE may then receive and measure the positioning signal on the carrier frequency #1 within each window duration in the positioning signal processing window #1. However, within each window duration in the positioning signal processing window #2, the positioning signal on the carrier frequency #2 can be received and measured only in the absence of the downlink signal corresponding to the URLLC.

Step 507c: reporting the positioning report.

With respect to other detailed introduction of steps 501c-507c, reference may be made to the description of the above embodiments, which will not be repeated here in the embodiments of the present disclosure.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

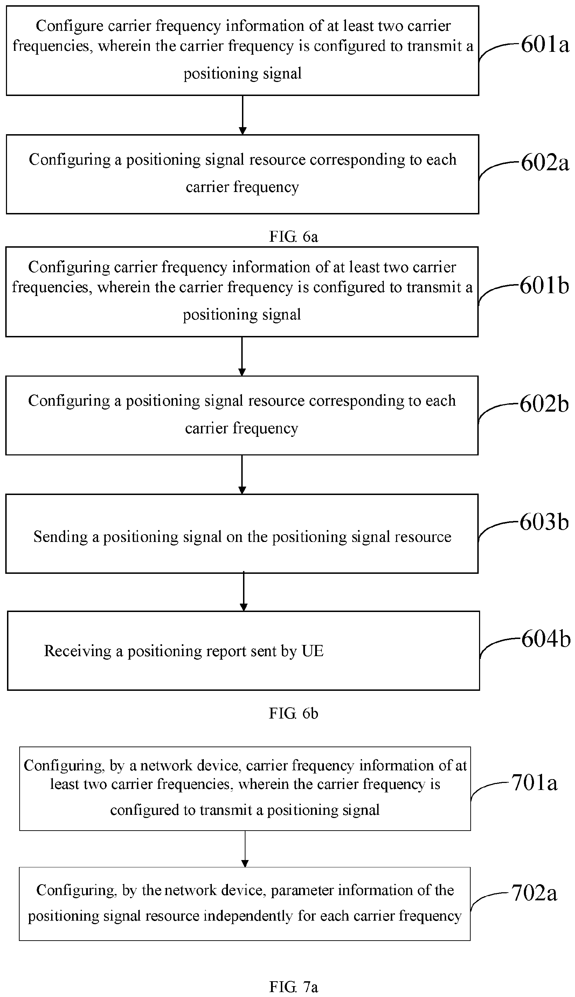

FIG 6a is a schematic flowchart of a signal processing method provided by an embodiment of the present disclosure. The method is performed by a network device and may be used for downlink positioning. As shown in FIG 6a, the method may include the following steps 601a-602a.

Step 601a: configuring carrier frequency information of at least two carrier frequencies, wherein the carrier frequency is configured to transmit a positioning signal.

Step 602a: configuring a positioning signal resource corresponding to each carrier frequency.

With respect to other detailed introduction of steps 601a-602a, reference may be made to the description of the above embodiments, which will not be repeated here in the embodiments of the present disclosure.

In an embodiment of the present disclosure, the network device includes at least one of a core network device and an access network device.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

FIG 6b is a schematic flowchart of a signal processing method provided by an embodiment of the present disclosure. The method is performed by a network device and may be used for downlink positioning. As shown in FIG 6b, the method may include the following steps 601b-604b.

Step 601b: configuring carrier frequency information of at least two carrier frequencies, wherein the carrier frequency is configured to transmit a positioning signal.

Step 602b: configuring a positioning signal resource corresponding to each carrier frequency.

Step 603b: sending a positioning signal on the positioning signal resource.

Step 604b: receiving a positioning report sent by UE.

With respect to other detailed introduction of steps 601b-604b, reference may be made to the description of the above embodiments, which will not be repeated here in the embodiments of the present disclosure.

In an embodiment of the present disclosure, the network device includes at least one of a core network device and an access network device.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

FIG 7a is a schematic flowchart of a signal processing method provided by an embodiment of the present disclosure. The method is performed by a network device and may be used for downlink positioning. As shown in FIG 7a, the method may include the following steps 701a-702a.

Step 701a: configuring, by the network device, carrier frequency information of at least two carrier frequencies, wherein the carrier frequency is configured to transmit a positioning signal.

Step 702a: configuring, by the network device, parameter information of the positioning signal resource independently for each carrier frequency, wherein the parameter information of the positioning signal resource configured independently corresponding to each carrier frequency is the same or different.

With respect to other detailed introduction of steps 701a-702a, reference may be made to the description of the above embodiments, which will not be repeated here in the embodiments of the present disclosure.

In an embodiment of the present disclosure, the network device includes at least one of a core network device and an access network device.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

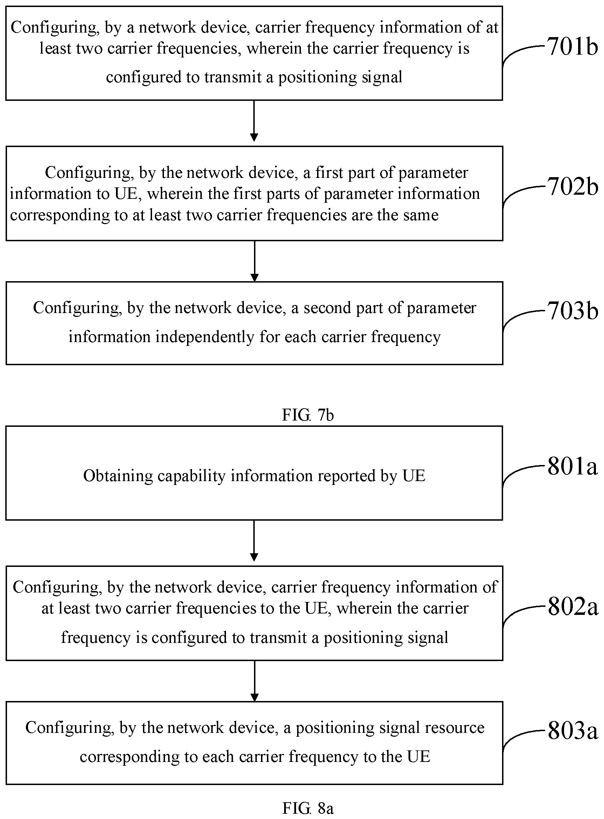

FIG 7b is a schematic flowchart of a signal processing method provided by an embodiment of the present disclosure. The method is performed by a network device and may be used for downlink positioning. As shown in FIG 7b, the method may include the following steps 701b-703b.

Step 701b: configuring, by the network device, carrier frequency information of at least two carrier frequencies, wherein the carrier frequency is configured to transmit a positioning signal.

Step 702b: configuring, by the network device, a first part of parameter information to UE, wherein the first parts of parameter information corresponding to at least two carrier frequencies are the same.

Step 703b: configuring, by the network device, a second part of parameter information independently for each carrier frequency, wherein the second parts of parameter information corresponding to at least two carrier frequencies are the same or different.

With respect to other detailed introduction of steps 701b-703b, reference may be made to the description of the above embodiments, which will not be repeated here in the embodiments of the present disclosure.

In an embodiment of the present disclosure, the network device includes at least one of a core network device and an access network device.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

FIG 8a is a schematic flowchart of a signal processing method provided by an embodiment of the present disclosure. The method is performed by a network device and may be used for downlink positioning. As shown in FIG 8a, the method may include the following steps 801a-803a.

Step 801a: obtaining capability information reported by UE, wherein the capability information is configured to indicate whether the UE supports simultaneous reception of positioning signals on a plurality of carrier frequencies.

Step 802a: configuring, by the network device, carrier frequency information of at least two carrier frequencies to the UE, wherein the carrier frequency is configured to transmit a positioning signal.

Step 803a: configuring, by the network device, a positioning signal resource corresponding to each carrier frequency to the UE.

In an embodiment of the present disclosure, configuring the positioning signal resource corresponding to each carrier frequency may include:
configuring positioning signal resources in the same time domain or different time domains for each carrier frequency when the capability information indicates that the UE supports simultaneous reception of positioning signals on a plurality of carrier frequencies; and
configuring positioning signal resources in different time domains for each carrier frequency when the capability information indicates that the UE does not support simultaneous reception of positioning signals on a plurality of carrier frequencies.

With respect to other detailed introduction of steps 801a-803a, reference may be made to the description of the above embodiments, which will not be repeated here in the embodiments of the present disclosure.

In an embodiment of the present disclosure, the network device includes at least one of a core network device and an access network device.

It should be noted that in an embodiment of the present disclosure, the above step 801a is optional. Specifically, in an embodiment of the present disclosure, the network device may receive the capability information reported by the UE by performing the above step 801a while performing downlink positioning. In addition, if the capability of "whether the UE supports simultaneous transmission of positioning signals on the plurality of carrier frequencies" does not change when the network device subsequently performs downlink positioning again, the network device may not perform the above step 801a (i.e., the network device will no longer receive the capability information reported by the UE). If the capability of "whether the UE supports simultaneous transmission of positioning signals on the plurality of carrier frequencies" has changed, the network device may perform the above step 801a (i.e., the access network device needs to receive the capability information updated and reported by the UE).

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

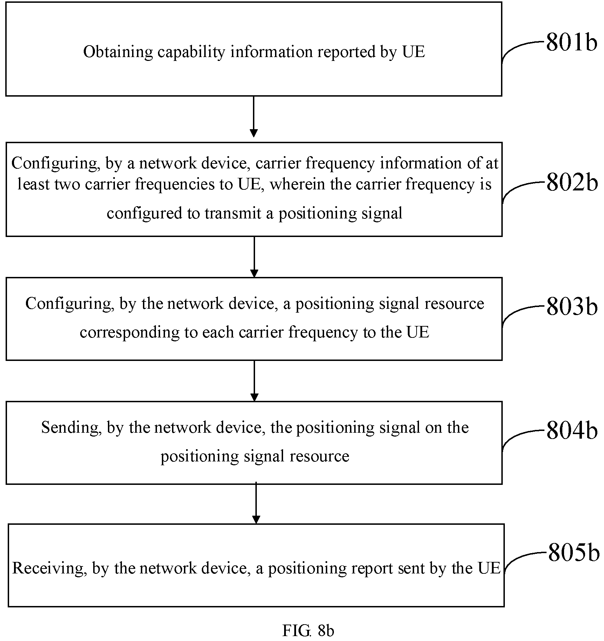

FIG 8b is a schematic flowchart of a signal processing method provided by an embodiment of the present disclosure. The method is performed by a network device and may be used for downlink positioning. As shown in FIG 8b, the method may include the following steps 801b-805b.

Step 801b: obtaining capability information reported by the UE, wherein the capability information is configured to indicate whether the UE supports simultaneous reception of positioning signals on a plurality of carrier frequencies.

Step 802b: configuring, by the network device, carrier frequency information of at least two carrier frequencies to the UE, wherein the carrier frequency is configured to transmit a positioning signal.

Step 803b: configuring, by the network device, a positioning signal resource corresponding to each carrier frequency to the UE.

In an embodiment of the present disclosure, configuring the positioning signal resource corresponding to each carrier frequency may include:
configuring positioning signal resources in the same time domain or different time domains for each carrier frequency when the capability information indicates that the UE supports simultaneous reception of positioning signals on a plurality of carrier frequencies; and
configuring positioning signal resources in different time domains for each carrier frequency when the capability information indicates that the UE does not support simultaneous reception of positioning signals on a plurality of carrier frequencies.

Step 804b: sending, by the network device, the positioning signal on the positioning signal resource.

In an embodiment of the present disclosure, sending the positioning signal on the positioning signal resource includes:
sending positioning signals simultaneously on positioning signal resources on at least two carrier frequencies; and/or
sending positioning signals non-simultaneously on positioning signal resources on at least two carrier frequencies.

Step 805b: receiving, by the network device, a positioning report sent by the UE.

With respect to other detailed introduction of steps 801b-805b, reference may be made to the description of the above embodiments, which will not be repeated here in the embodiments of the present disclosure.

In an embodiment of the present disclosure, the network device includes at least one of a core network device and an access network device.

It should be noted that in an embodiment of the present disclosure, the above step 801b is optional. Specifically, in an embodiment of the present disclosure, the network device may receive the capability information reported by the UE by performing the above step 801b while performing downlink positioning. In addition, if the capability of "whether the UE supports simultaneous transmission of positioning signals on the plurality of carrier frequencies" does not change when the network device subsequently performs downlink positioning again, the network device may not perform the above step 801b (i.e., the network device will no longer receive the capability information reported by the UE). If the capability of "whether the UE supports simultaneous transmission of positioning signals on the plurality of carrier frequencies" has changed, the network device may perform the above step 801b (i.e., the access network device receives the capability information updated and reported by the UE).

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

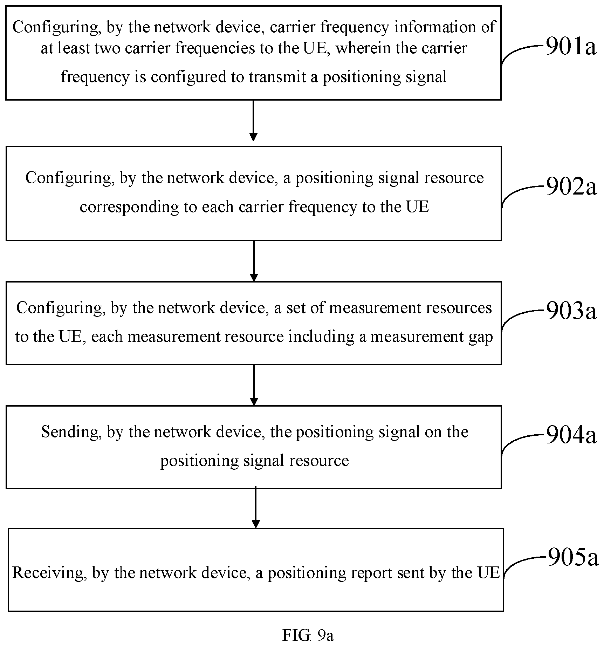

FIG 9a is a schematic flowchart of a signal processing method provided by an embodiment of the present disclosure. The method is performed by a network device and may be used for downlink positioning. As shown in FIG 9a, the method may include the following steps 901a-905a.

Step 901a: configuring, by the network device, carrier frequency information of at least two carrier frequencies to the UE, wherein the carrier frequency is configured to transmit a positioning signal.

Step 902a: configuring, by the network device, a positioning signal resource corresponding to each carrier frequency to the UE.

Step 903a: configuring, by the network device, a set of measurement resources to the UE, each measurement resource including a measurement gap.

Step 904a: sending, by the network device, the positioning signal on the positioning signal resource.

Step 905a: receiving, by the network device, a positioning report sent by the UE.

With respect to other detailed introduction of steps 901a-905a, reference may be made to the description of the above embodiments, which will not be repeated here in the embodiments of the present disclosure.

In an embodiment of the present disclosure, the network device includes at least one of a core network device and an access network device.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

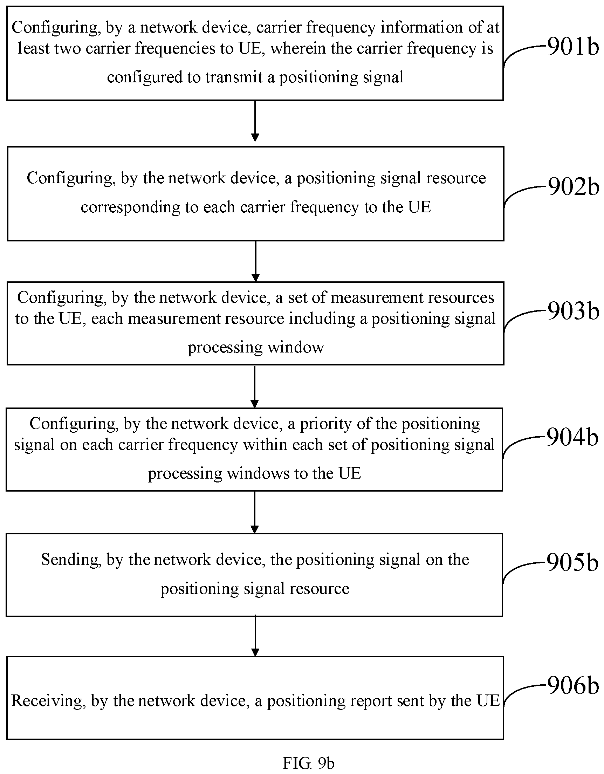

FIG 9b is a schematic flowchart of a signal processing method provided by an embodiment of the present disclosure. The method is performed by a network device and may be used for downlink positioning. As shown in FIG 9b, the method may include the following steps 901b-906b.

Step 901b: configuring, by the network device, carrier frequency information of at least two carrier frequencies to UE, wherein the carrier frequency is configured to transmit a positioning signal.

Step 902b: configuring, by the network device, a positioning signal resource corresponding to each carrier frequency to the UE.

Step 903b: configuring, by the network device, a set of measurement resources to the UE, each measurement resource including a positioning signal processing window.

Step 904b: configuring, by the network device, a priority of the positioning signal on each carrier frequency within each set of positioning signal processing windows to the UE.

In an embodiment of the present disclosure, a set of positioning signal processing windows is correspondingly configured with at least one priority. When the set of positioning signal processing windows is correspondingly configured with a plurality of priorities, the plurality of priorities has a correspondence relationship with a plurality of carrier frequencies, and the priorities corresponding to the positioning signals on different carrier frequencies are the same or different.

Step 905b: sending, by the network device, the positioning signal on the positioning signal resource.

Step 906b: receiving, by the network device, a positioning report sent by the UE.

With respect to other detailed introduction of steps 901b-906b, reference may be made to the description of the above embodiments, which will not be repeated here in the embodiments of the present disclosure.

In an embodiment of the present disclosure, the network device includes at least one of a core network device and an access network device.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

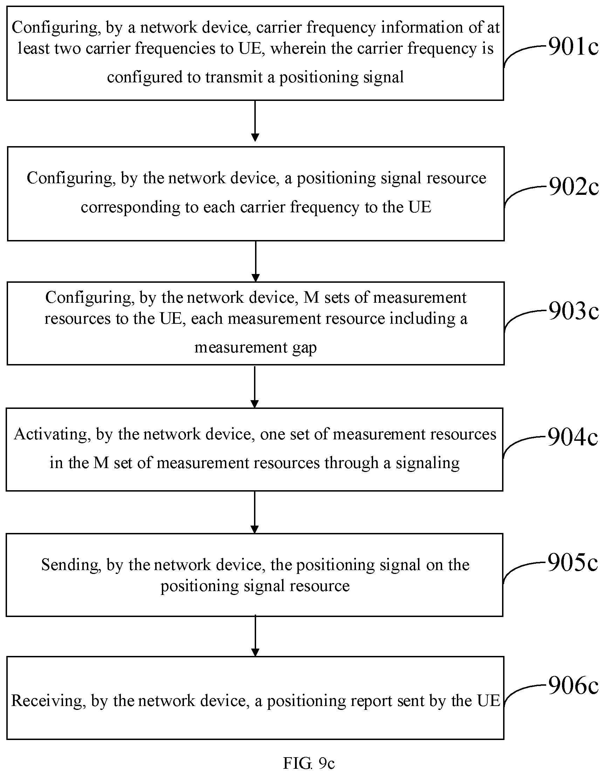

FIG 9c is a schematic flowchart of a signal processing method provided by an embodiment of the present disclosure. The method is performed by a network device and may be used for downlink positioning. As shown in FIG 9c, the method may include the following steps 901c-906c.

Step 901c: configuring, by the network device, carrier frequency information of at least two carrier frequencies to the UE, wherein the carrier frequency is configured to transmit a positioning signal.

Step 902c: configuring, by the network device, a positioning signal resource corresponding to each carrier frequency to the UE.

Step 903c: configuring, by the network device, M sets of measurement resources to the UE, each measurement resource including a measurement gap.

Step 904c: activating, by the network device, one set of measurement resources in the M sets of measurement resources through a signaling.

Step 905c: sending, by the network device, the positioning signal on the positioning signal resource.

Step 906c: receiving, by the network device, a positioning report sent by the UE.

With respect to other detailed introduction of steps 901c-907c, reference may be made to the description of the above embodiments, which will not be repeated here in the embodiments of the present disclosure.

In an embodiment of the present disclosure, the network device includes at least one of a core network device and an access network device.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

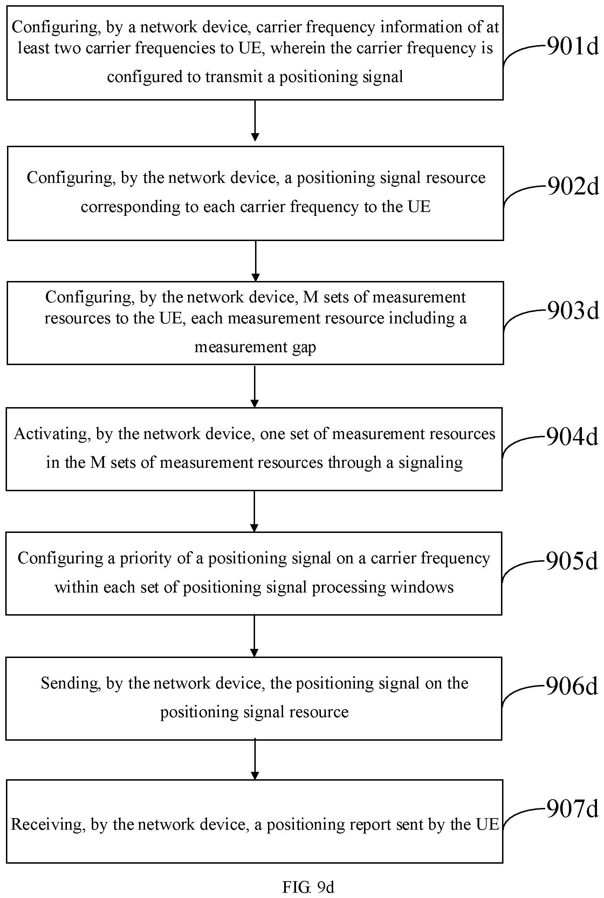

FIG 9d is a schematic flowchart of a signal processing method provided by an embodiment of the present disclosure. The method is performed by a network device and may be used for downlink positioning. As shown in FIG 9d, the method may include the following steps 901d-907d.

Step 901d: configuring, by the network device, carrier frequency information of at least two carrier frequencies to UE, wherein the carrier frequency is configured to transmit a positioning signal.

Step 902d: configuring, by the network device, a positioning signal resource corresponding to each carrier frequency to the UE.

Step 903d: configuring, by the network device, M sets of measurement resources to the UE, each measurement resource including a positioning signal processing window.

Step 904d: activating, by the network device, one set of measurement resources in the M sets of measurement resources through a signaling.

Step 905d: configuring a priority of the positioning signal on each carrier frequency in each set of positioning signal processing windows.

In an embodiment of the present disclosure, a set of positioning signal processing windows is correspondingly configured with at least one priority. When the set of positioning signal processing windows is correspondingly configured with a plurality of priorities, the plurality of priorities has a correspondence relationship with a plurality of carrier frequencies, and the priorities corresponding to the positioning signals on different carrier frequencies are the same or different.

Step 906d: sending, by the network device, the positioning signal on the positioning signal resource.

Step 907d: receiving, by the network device, a positioning report sent by the UE.

With respect to other detailed introduction of steps 901d-907d, reference may be made to the description of the above embodiments, which will not be repeated here in the embodiments of the present disclosure.

In an embodiment of the present disclosure, the network device includes at least one of a core network device and an access network device.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

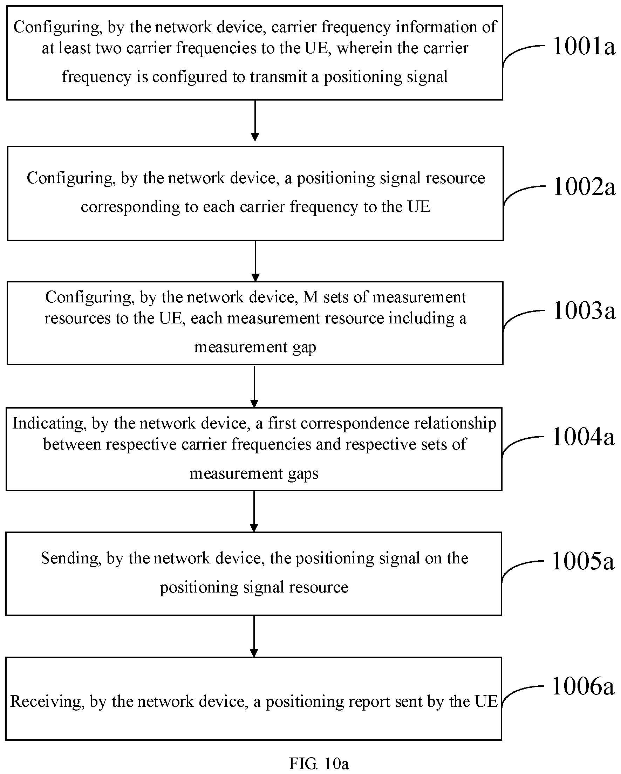

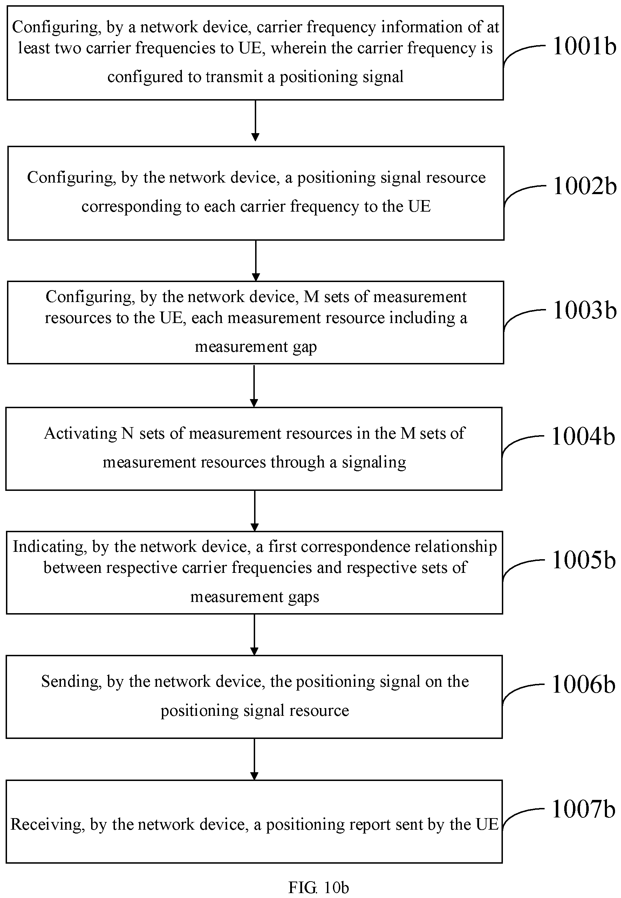

FIG 10a is a schematic flowchart of a signal processing method provided by an embodiment of the present disclosure. The method is performed by a network device and may be used for downlink positioning. As shown in FIG 10b, the method may include the following steps 1001a-1006a.

Step 1001a: configuring, by the network device, carrier frequency information of at least two carrier frequencies to the UE, wherein the carrier frequency is configured to transmit a positioning signal.

Step 1002a: configuring, by the network device, a positioning signal resource corresponding to each carrier frequency to the UE.

Step 1003a: configuring, by the network device, M sets of measurement resources to the UE, each measurement resource including a measurement gap.

Step 1004a: indicating, by the network device, a first correspondence relationship between respective carrier frequencies and respective sets of measurement gaps.

Step 1005a: sending, by the network device, the positioning signal on the positioning signal resource.

Step 1006a: receiving, by the network device, a positioning report sent by the UE.

With respect to other detailed introduction of steps 1001a-1006a, reference may be made to the description of the above embodiments, which will not be repeated here in the embodiments of the present disclosure.

In an embodiment of the present disclosure, the network device includes at least one of a core network device and an access network device.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

FIG 10b is a schematic flowchart of a signal processing method provided by an embodiment of the present disclosure. The method is performed by a network device and may be used for downlink positioning. As shown in FIG 10b, the method may include the following steps 1001b-1007b.

Step 1001b: configuring, by the network device, carrier frequency information of at least two carrier frequencies to UE, wherein the carrier frequency is configured to transmit a positioning signal.

Step 1002b: configuring, by the network device, a positioning signal resource corresponding to each carrier frequency to the UE.

Step 1003b: configuring, by the network device, M sets of measurement resources to the UE, each measurement resource including a measurement gap.

Step 1004b: activating, by the network device, N sets of measurement resources in the M sets of measurement resources through a signaling, N being an integer greater than 1, and N being less than M.

Step 1005b: indicating, by the network device, a first correspondence relationship between respective carrier frequencies and respective sets of measurement gaps.

Step 1006b: sending, by the network device, the positioning signal on the positioning signal resource.

Step 1007b: receiving, by the network device, a positioning report sent by the UE.

With respect to other detailed introduction of steps 1001b-1007b, reference may be made to the description of the above embodiments, which will not be repeated here in the embodiments of the present disclosure.

In an embodiment of the present disclosure, the network device includes at least one of a core network device and an access network device.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

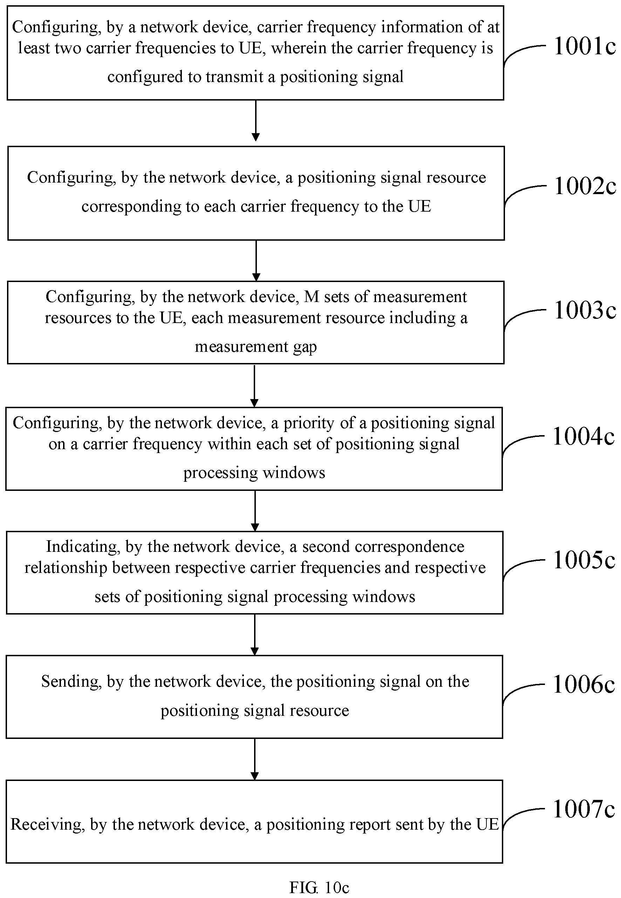

FIG 10c is a schematic flowchart of a signal processing method provided by an embodiment of the present disclosure. The method is performed by a network device and may be used for downlink positioning. As shown in FIG 10c, the method may include the following steps 1001c-1007c.

Step 1001c: configuring, by the network device, carrier frequency information of at least two carrier frequencies to UE, wherein the carrier frequency is configured to transmit a positioning signal.

Step 1002c: configuring, by the network device, a positioning signal resource corresponding to each carrier frequency to the UE.

Step 1003c: configuring, by the network device, M sets of measurement resources to the UE, each measurement resource including a positioning signal processing window.

Step 1004c: configuring, by the network device, a priority of the positioning signal on each carrier frequency within each set of positioning signal processing windows.

Step 1005c: indicating, by the network device, a second correspondence relationship between respective carrier frequencies and respective sets of positioning signal processing windows.

Step 1006c: sending, by the network device, the positioning signal on the positioning signal resources.

Step 1007c: receiving, by the network device, a positioning report sent by the UE.

With respect to other detailed introduction of steps 1001c-1007c, reference may be made to the description of the above embodiments, which will not be repeated here in the embodiments of the present disclosure.

In an embodiment of the present disclosure, the network device includes at least one of a core network device and an access network device.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

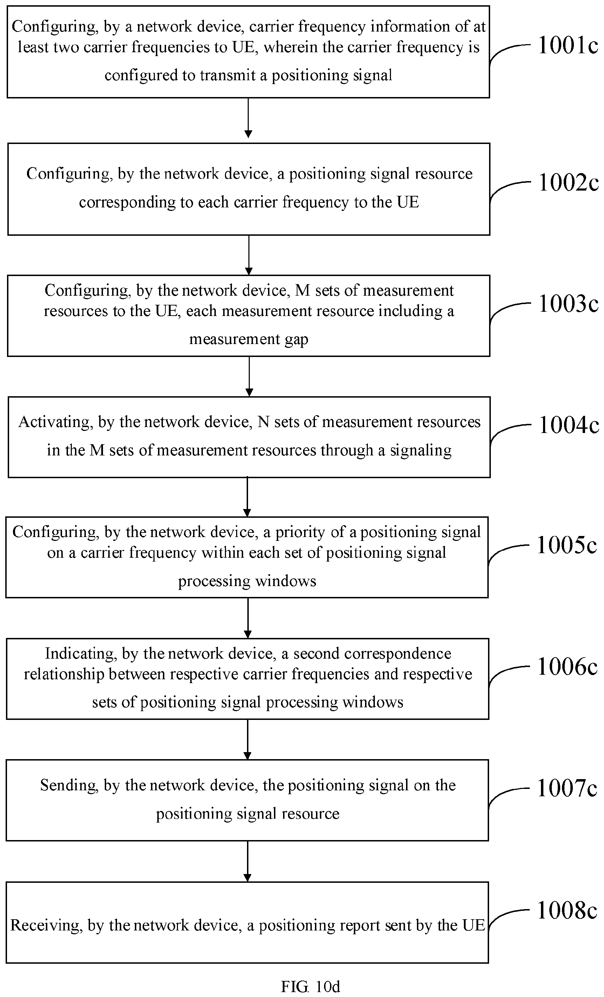

FIG 10d is a schematic flowchart of a signal processing method provided by an embodiment of the present disclosure. The method is performed by a network device and may be used for downlink positioning. As shown in FIG 10d, the method may include the following steps 1001d-1008d.

Step 1001d: configuring, by the network device, carrier frequency information of at least two carrier frequencies to UE, wherein the carrier frequency is configured to transmit a positioning signal.

Step 1002d: configuring, by the network device, a positioning signal resource corresponding to each carrier frequency to the UE.

Step 1003d: configuring, by the network device, M sets of measurement resources to the UE, each measurement resource including a positioning signal processing window.

Step 1004d: activating, by the network device, N sets of measurement resources in the M sets of measurement resources through a signaling, N being an integer greater than 1, and N being less than M.
step 1005d: configuring, by the network device, a priority of the positioning signal on the carrier frequency within each set of positioning signal processing windows.

Step 1006d: indicating, by the network device, a second correspondence relationship between respective carrier frequencies and respective sets of positioning signal processing windows.

Step 1007d: sending, by the network device, the positioning signal on the positioning signal resource.

Step 1008d: receiving, by the network device, a positioning report sent by the UE.

With respective to other detailed introduction of steps 1001d-1008d, reference may be made to the description of the above embodiments, which will not be repeated here in the embodiments of the present disclosure.

In an embodiment of the present disclosure, the network device includes at least one of a core network device and an access network device.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

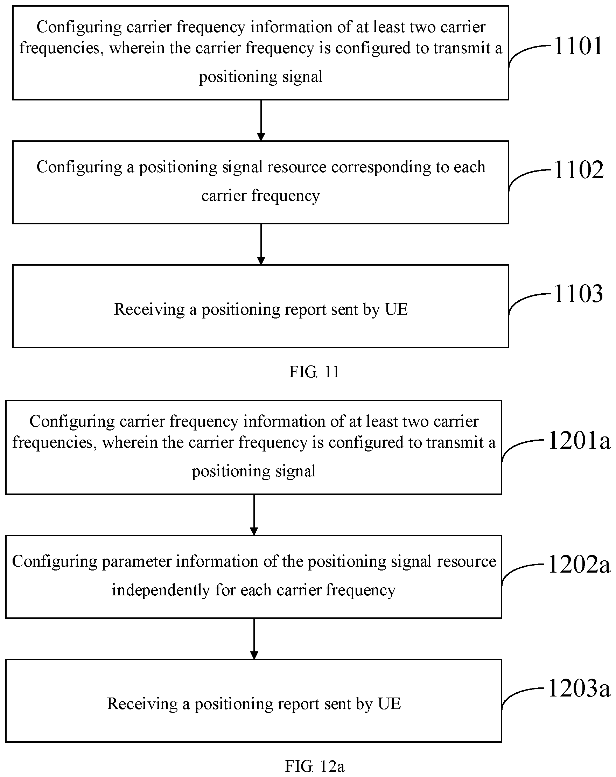

FIG 11 is a schematic flowchart of a signal processing method provided by an embodiment of the present disclosure. The method is performed by a network device which may be a core network device, and may be used for downlink positioning. As shown in FIG 11, the method may include the following steps 1101-1103.

Step 1101: configuring carrier frequency information of at least two carrier frequencies, wherein the carrier frequency is configured to transmit a positioning signal.

In an embodiment of the present disclosure, the core network device may configure carrier frequency information of at least two carrier frequencies to the UE and the access network device, respectively.

Step 1102: configuring a positioning signal resource corresponding to each carrier frequency.

In an embodiment of the present disclosure, the core network device may configure a positioning signal resource corresponding to each carrier frequency to the UE and the access network device, respectively.

Step 1103: receiving a positioning report sent by the UE.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

FIG 12a is a schematic flowchart of a signal processing method provided by an embodiment of the present disclosure. The method is performed by a network device which may be a core network device, and may be used for downlink positioning. As shown in FIG 12a, the method may include the following steps 1201a-1203a.

Step 1201a: configuring carrier frequency information of at least two carrier frequencies, wherein the carrier frequency is configured to transmit a positioning signal.

Step 1202a: configuring parameter information of the positioning signal resources independently for each carrier frequency.

Step 1203a: receiving a positioning report sent by the UE.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

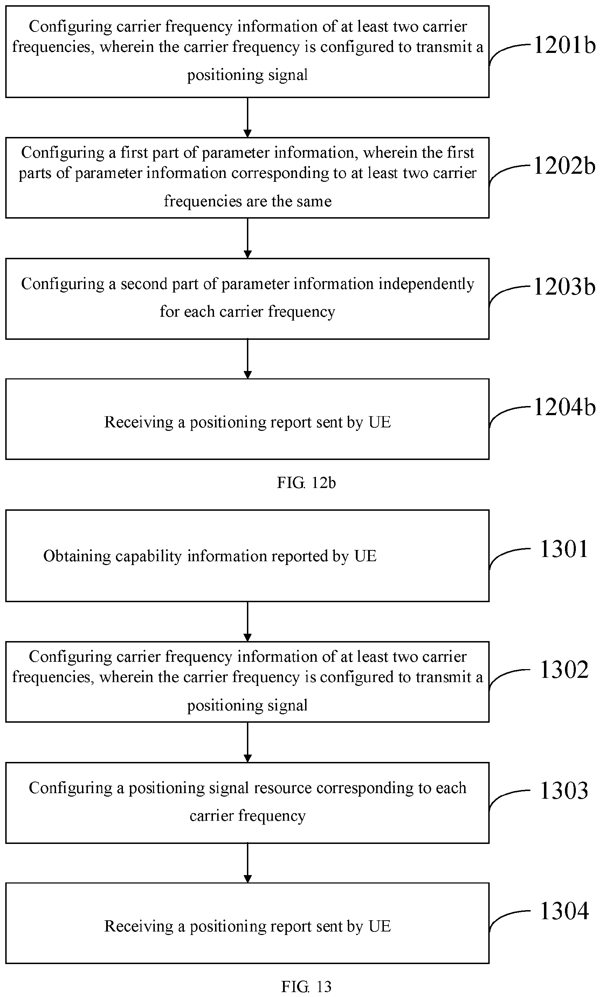

FIG 12b is a schematic flowchart of a signal processing method provided by an embodiment of the present disclosure. The method is performed by a network device which may be a core network device, and may be used for downlink positioning. As shown in FIG 12b, the method may include the following steps 1201b-1204b.

Step 1201b: configuring carrier frequency information of at least two carrier frequencies, wherein the carrier frequency is configured to transmit a positioning signal.

Step 1202b: configuring a first part of parameter information, wherein the first parts of parameter information corresponding to at least two carrier frequencies are the same.

Step 1203b: configuring a second part of parameter information independently for each carrier frequency, wherein the second parts of parameter information corresponding to at least two carrier frequencies are the same or different.

Step 1204b: receiving a positioning report sent by UE.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

FIG 13 is a schematic flowchart of a signal processing method provided by an embodiment of the present disclosure. The method is performed by a network device which may be a core network device, and may be used for downlink positioning. As shown in FIG 13, the method may include the following steps 1301-1304.

Step 1301: obtaining capability information reported by UE.

Step 1302: configuring carrier frequency information of at least two carrier frequencies, wherein the carrier frequency is configured to transmit a positioning signal.

Step 1303: configuring a positioning signal resource corresponding to each carrier frequency.

Step 1304: receiving a positioning report sent by the UE.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

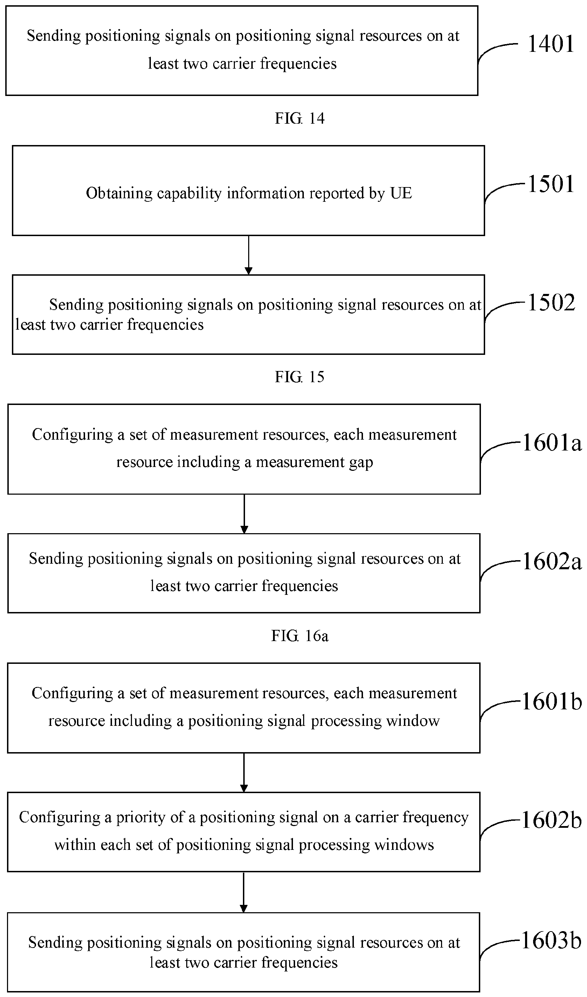

FIG 14 is a schematic flowchart of a signal processing method provided by an embodiment of the present disclosure. The method is performed by a network device which may be a core network device, and may be used for downlink positioning. As shown in FIG 14, the method may include the following step 1401.

Step 1401: sending the positioning signals on positioning signal resources on at least two carrier frequencies.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

FIG 15 is a schematic flowchart of a signal processing method provided by an embodiment of the present disclosure. The method is performed by a network device which may be a core network device, and may be used for downlink positioning. As shown in FIG 15, the method may include the following step 1501-1502.

Step 1501: obtaining capability information reported by UE.

Step 1502: sending positioning signals on positioning signal resources on at least two carrier frequencies.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

FIG 16a is a schematic flowchart of a signal processing method provided by an embodiment of the present disclosure. The method is performed by a network device which may be a core network device, and may be used for downlink positioning. As shown in FIG 16a, the method may include the following steps 1601a-1602a.

Step 1601a: configuring a set of measurement resources, each measurement resource including a measurement gap.

Step 1602a: sending positioning signals on positioning signal resources on at least two carrier frequencies.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

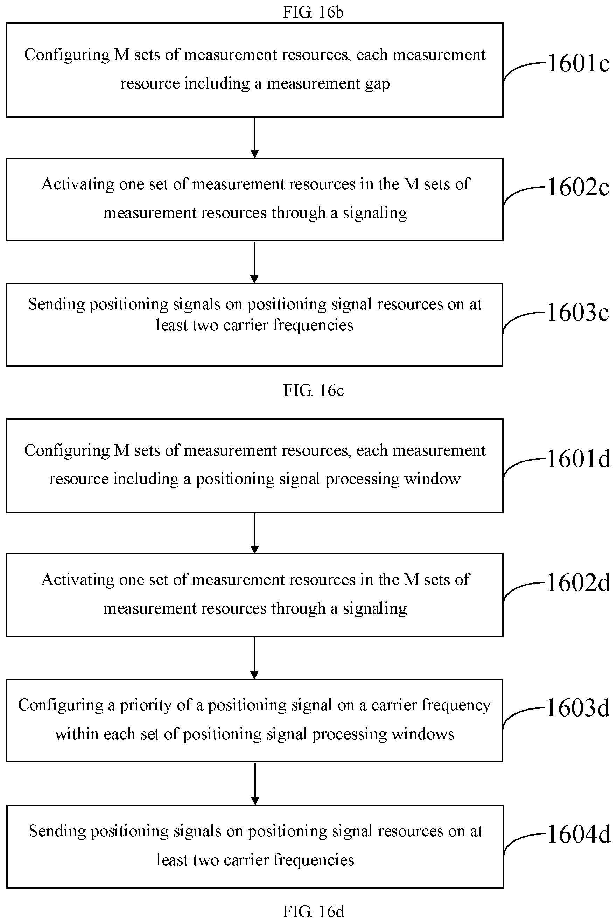

FIG 16b is a schematic flowchart of a signal processing method provided by an embodiment of the present disclosure. The method is performed by a network device which may be a core network device, and may be used for downlink positioning. As shown in FIG 16b, the method may include the following steps 1601b-1603b.

Step 1601b: configuring a set of measurement resources, each measurement resource including a positioning signal processing window.

Step 1602b: configuring a priority of the positioning signal on each carrier frequency in each set of positioning signal processing windows.

Step 1603b: sending positioning signals on positioning signal resources on at least two carrier frequencies.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

FIG 16c is a schematic flowchart of a signal processing method provided by an embodiment of the present disclosure. The method is performed by a network device which may be a core network device, and may be used for downlink positioning. As shown in FIG 16c, the method may include the following steps 1601c-1603c.

Step 1601c: configuring M sets of measurement resources, each measurement resource including a measurement gap.

Step 1602c: activating one set of measurement resources in the M sets of measurement resources through a signaling.

Step 1603c: sending positioning signals on positioning signal resources on at least two carrier frequencies.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

FIG 16d is a schematic flowchart of a signal processing method provided by an embodiment of the present disclosure. The method is performed by a network device which may be a core network device, and may be used for downlink positioning. As shown in FIG 16d, the method may include the following steps 1601d-1604d.

Step 1601d: configuring M sets of measurement resources, each measurement resource including a positioning signal processing window.

Step 1602d: activating one set of measurement resources in the M sets of measurement resources through a signaling.

Step 1603d: configuring a priority of the positioning signal on each carrier frequency in each set of positioning signal processing windows.

Step 1604d: sending the positioning signals on positioning signal resources on at least two carrier frequencies.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

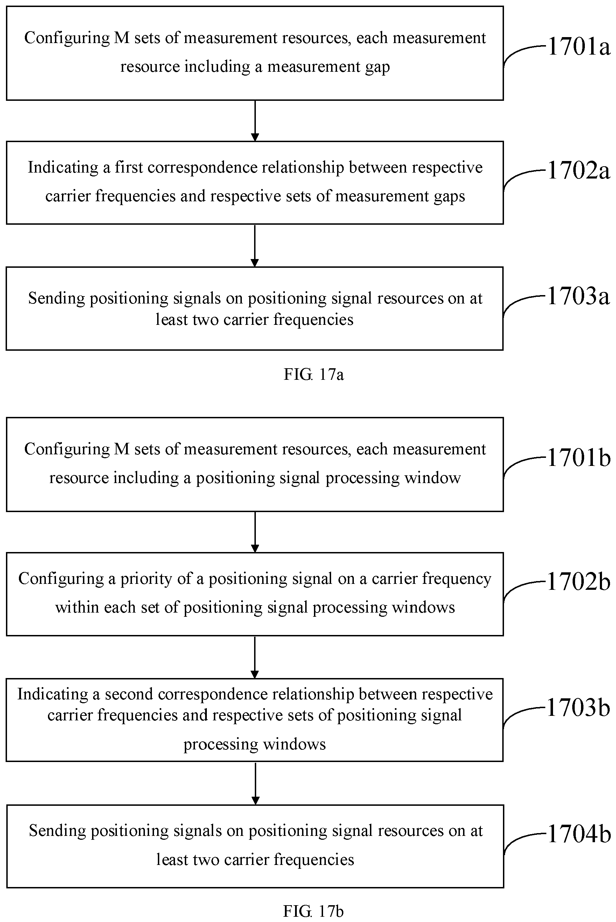

FIG 17a is a schematic flowchart of a signal processing method provided by an embodiment of the present disclosure. The method is performed by a network device which may be a core network device, and may be used for downlink positioning. As shown in FIG 17a, the method may include the following steps 1701a-1703a.

Step 1701a: configuring M seting of measurement resources, each measurement resource including a measurement gap.

Step 1702a: indicating a first correspondence relationship between respective carrier frequencies and respective sets of measurement gaps.

Step 1703a: sending positioning signals on positioning signal resources on at least two carrier frequencies.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

FIG 17b is a schematic flowchart of a signal processing method provided by an embodiment of the present disclosure. The method is performed by a network device which may be a core network device, and may be used for downlink positioning. As shown in FIG 17b, the method may include the following steps 1701b-1704b.

Step 1701b: configuring M sets of measurement resources, each measurement resource including a positioning signal processing window.

Step 1702b: configuring a priority of the positioning signal on each carrier frequency in each set of positioning signal processing windows.

Step 1703b: indicating a second correspondence relationship between respective carrier frequencies and respective sets of positioning signal processing windows.

Step 1702b: sending positioning signals on positioning signal resources on at least two carrier frequencies.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

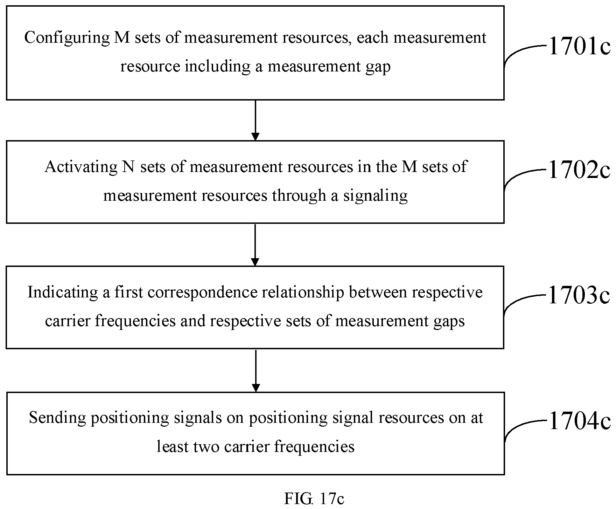

FIG 17c is a schematic flowchart of a signal processing method provided by an embodiment of the present disclosure. The method is performed by a network device which may be a core network device, and may be used for downlink positioning. As shown in FIG 17c, the method may include the following steps 1701c-1704c.

Step 1702c: configuring M sets of measurement resources, each measurement resource including a measurement gap.

Step 1703c: activating N sets of measurement resources in the M sets of measurement resources through a signaling.

Step 1703c: indicating a first correspondence relationship between respective carrier frequencies and respective sets of measurement gaps.

Step 1704c: sending positioning signals on positioning signal resources on at least two carrier frequencies.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

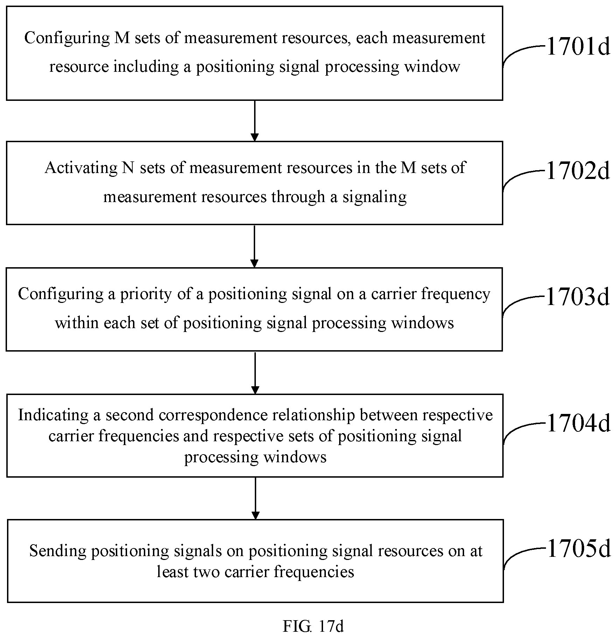

FIG 17d is a schematic flowchart of a signal processing method provided by an embodiment of the present disclosure. The method is performed by a network device which may be a core network device, and may be used for downlink positioning. As shown in FIG 17d, the method may include the following steps 1701d-1705d.

Step 1701d: configuring M sets of measurement resources, each measurement resource including a positioning signal processing window.

Step 1702d: activating N sets of measurement resources in the M sets of measurement resources through a signaling.

Step 1703d: configuring a priority of the positioning signal on each carrier frequency in each set of positioning signal processing windows.

Step 1704d: indicating a second correspondence relationship between respective carrier frequencies and respective sets of positioning signal processing windows.

Step 1705d: sending positioning signals on positioning signal resources on at least two carrier frequencies.

In summary, in the signal processing method provided by the embodiment of the present disclosure, the UE may obtain carrier frequency information of at least two carrier frequencies configured by the network device, wherein the carrier frequency is configured to transmit a positioning signal; then, the UE may also obtain a positioning signal resource corresponding to each carrier frequency configured by the network device; and the UE may measure the positioning signal based on the positioning signal resources to obtain a positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

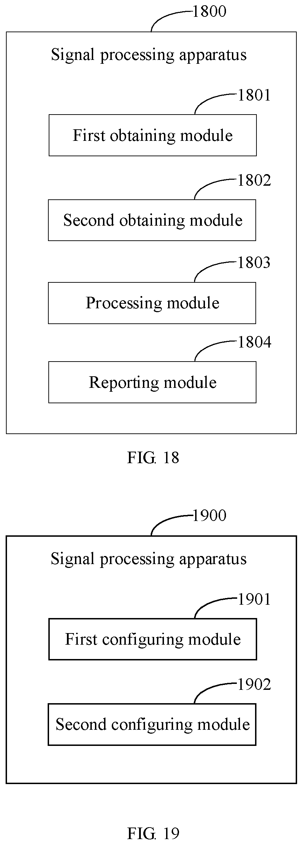

FIG 18 is a schematic block diagram of a signal processing apparatus provided by an embodiment of the present disclosure. As shown in FIG 18, the apparatus may include:
a first obtaining module, configured to obtain carrier frequency information of at least two carrier frequencies configured by a network device, wherein the carrier frequency is configured to transmit a positioning signal;
a second obtaining module, configured to obtain a positioning signal resource corresponding to each carrier frequency configured by the network device;
a processing module, configured to measure the positioning signal based on the positioning signal resource to obtain a positioning report; and
a reporting module, configured to report the positioning report.

In summary, in the signal processing apparatus provided by the embodiment of the present disclosure, the UE may obtain carrier frequency information of at least two carrier frequencies configured by the network device, wherein the carrier frequency is configured to transmit a positioning signal; then, the UE may also obtain the positioning signal resource corresponding to each carrier frequency configured by the network device; and the UE may measure the positioning signal based on the positioning signal resources to obtain the positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

Optionally, in an embodiment of the present disclosure, the carrier frequency information includes at least one of the followings:
a serial ID of each carrier frequency;
a carrier frequency combination ID corresponding to at least two carrier frequencies;
a starting frequency point position of each carrier frequency; and
an end frequency point position of each carrier frequency.

Optionally, in an embodiment of the present disclosure, the positioning signal is configured to implement carrier phase-based positioning.

Optionally, in an embodiment of the present disclosure, the second obtaining module is configured to:
obtain parameter information of positioning signal resources corresponding to each carrier frequency configured by the network device, the parameter information including at least one of the followings:
a positioning signal resource ID;
a positioning signal resource set ID;
TRP ID;
transmission cycle;
slot offset;
a number of repeated transmissions within one cycle;
a time interval between every two repeated transmissions;
a number of symbols occupied;
muting pattern;
comb-size;
starting symbol position;
subcarrier spacing SCS;
QCL information;
a number of samples measured;
carrier frequency bandwidth; and
starting physical resource block PRB position.

Optionally, in an embodiment of the present disclosure, the second obtaining module is further configured to:
receive parameter information of the positioning signal resources independently configured by the network device for each carrier frequency, wherein the parameter information of the positioning signal resources independently configured for each carrier frequency are the same or different.

Optionally, in an embodiment of the present disclosure, the second obtaining module is further configured to:
obtain a first part of parameter information configured by the network device, wherein the first parts of parameter information corresponding to the at least two carrier frequencies are the same; and
receive a second part of parameter information independently configured by the network device for each carrier frequency, wherein the second parts of parameter information corresponding to at least two carrier frequencies are the same or different.

Optionally, in an embodiment of the present disclosure, the apparatus is further configured to:
report capability information, wherein the capability information is configured to indicate whether the UE supports simultaneous reception of positioning signals on a plurality of carrier frequencies.

Optionally, in an embodiment of the present disclosure, the apparatus is further configured to:
determine one or more sets of measurement resources for the positioning signal, each measurement resource including a measurement gap and/or a positioning signal processing window.

Optionally, in an embodiment of the present disclosure, the apparatus is further configured to:
obtain a set of measurement resources configured by the network device;
determine the set of configured measurement resources as the measurement resources for the positioning signal.

Optionally, in an embodiment of the present disclosure, the apparatus is further configured to:
obtain a plurality of sets of measurement resources configured by the network device; and
activate one set of measurement resources in the plurality of sets of measurement resources based on a signaling sent by the network device;
determine the set of activated measurement resources as the measurement resources for the positioning signal.

Optionally, in an embodiment of the present disclosure, the apparatus is further configured to:
obtain a plurality of sets of measurement resources configured by the network device; and
determine the plurality of sets of measurement resources as the plurality of sets of measurement resources for the positioning signal.

Optionally, in an embodiment of the present disclosure, the apparatus is further configured to:
obtain M sets of measurement resources configured by the network device;
activate N sets of measurement resources in the M sets of measurement resources based on the signaling sent by the network device, M and N being integers greater than 1, and M being greater than N; and
determine the N sets of activated measurement resources as the measurement resources for the positioning signal.

Optionally, in an embodiment of the present disclosure, the measurement resource configured for the first part of carrier frequencies in at least two carrier frequencies is the measurement gap, and the measurement resource configured for the second part of carrier frequencies is the positioning signal processing window; or
both the measurement gap and the positioning signal processing window are configured for one carrier frequency.

Optionally, in an embodiment of the present disclosure, the processing module is further configured to:
measure positioning signals on different carrier frequencies within a single gap duration in the set of measurement gaps.

Optionally, in an embodiment of the present disclosure, the processing module is further configured to:
measure positioning signals on different carrier frequencies within different gap durations in the set of measurement gaps.

Optionally, in an embodiment of the present disclosure, the apparatus is further configured to:
obtain a priority of the positioning signal configured by the network device on each carrier frequency within the set of positioning signal processing windows, wherein
the priority of the positioning signal includes at least one of the followings:
   the priority of the positioning signal being higher than that of the first downlink signal and the second downlink signal;
   the priority of the positioning signal is higher than that of the first downlink signal but lower than that of the second downlink signal; and
   the priority of the positioning signal is lower than that of the first downlink signal and the second downlink signal, wherein
   the second downlink signal is a downlink signal corresponding to URLLC, and the first downlink signal is a downlink signal corresponding to a non-URLLC.

Optionally, in an embodiment of the present disclosure, the set of positioning signal processing windows is correspondingly configured with at least one priority. When the set of positioning signal processing windows is correspondingly configured with a plurality of priorities, the plurality of priorities has a correspondence relationship with a plurality of carrier frequencies, and the corresponding priorities of the positioning signals on different carrier frequencies are the same or different.

Optionally, in an embodiment of the present disclosure, the processing module is further configured to:
measure positioning signals on different carrier frequencies based on the priority of the positioning signal within one window duration in the set of positioning signal processing windows.

Optionally, in an embodiment of the present disclosure, the processing module is further configured to:
measure positioning signals on different carrier frequencies based on the priority of the positioning signal within different window durations in the set of positioning signal processing windows.

Optionally, in an embodiment of the present disclosure, the apparatus is further configured to:
obtain a first correspondence relationship between respective carrier frequencies and respective sets of measurement gaps indicated by the network device.

Optionally, in an embodiment of the present disclosure, the processing module is further configured to:
measure the positioning signals on the corresponding carrier frequencies based on the first correspondence relationship within a gap duration in each set of measurement gaps.

Optionally, in an embodiment of the present disclosure, the apparatus is further configured to:
obtain a second correspondence relationship between respective carrier frequencies and respective sets of positioning signal processing windows indicated by the network device.

Optionally, in an embodiment of the present disclosure, the apparatus is further configured to:
obtain a priority of the positioning signal configured by the network device on each carrier frequency within each set of the positioning signal processing windows, wherein
the priority of the positioning signal includes at least one of the followings:
   the priority of the positioning signal being higher than that of the first downlink signal and the second downlink signal;
   the priority of the positioning signal being higher than that of the first downlink signal but lower than that of the second downlink signal; and
   the priority of the positioning signal being lower than that of the first downlink signal and the second downlink signal, wherein
   the second downlink signal is a downlink signal corresponding to URLLC, and the first downlink signal is a downlink signal corresponding to a non-URLLC, wherein
   the priorities of the positioning signal for different sets of positioning signal processing windows are the same or different.

Optionally, in an embodiment of the present disclosure, the processing module is further configured to:
measure the positioning signal on the corresponding carrier frequency within a window duration in each set of measurement positioning signal processing windows based on the second correspondence relationship and the priority of the positioning signal corresponding to each set of positioning signal processing windows.

Optionally, in an embodiment of the present disclosure, the positioning report may include at least one of the followings:
a number of whole cycles of phases;
a fractional part of phases less than the whole cycle;
phase error group information when the UE receives the positioning signal, the phase error group information including an ID of a phase error group and/or an error value corresponding to the phase error group;
RSRP;
AoA;
AoD;
ToA;
TDoA;
RTT;
RxTEG;
TxTEG; and
TxRxTEG
FIG 19 is a schematic block diagram of a signal processing apparatus provided by an embodiment of the present disclosure. As shown in FIG 19, the apparatus may include:
   a first configuring module, configured to configure carrier frequency information of at least two carrier frequencies, wherein the carrier frequency is configured to transmit a positioning signal; and
   a second configuring module, configured to configure a positioning signal resource corresponding to each carrier frequency.

In summary, in the signal processing apparatus provided by the embodiment of the present disclosure, the UE may obtain carrier frequency information of at least two carrier frequencies configured by the network device, wherein the carrier frequency is configured to transmit a positioning signal; then, the UE may also obtain the positioning signal resource corresponding to each carrier frequency configured by the network device; and the UE may measure the positioning signal based on the positioning signal resources to obtain the positioning report and report the positioning report. It can thus be seen that the present disclosure provides a multi-carrier frequency positioning signal configuration method and a measurement report reporting method for a multi-carrier frequency scene, thereby solving the technical problem of "how to configure a multi-carrier frequency positioning signal and how to report a measurement report".

Optionally, in an embodiment of the present disclosure, the apparatus is further configured to:
a sending module, configured to send a positioning signal on the positioning signal resource; and
a receiving module, configured to receive a positioning report send from the UE.

Optionally, in an embodiment of the present disclosure, the carrier frequency information includes at least one of the followings:
a serial ID of each carrier frequency;
a carrier frequency combination ID corresponding to at least two carrier frequencies;
a starting frequency point position of each carrier frequency; and
an end frequency point position of each carrier frequency.

Optionally, in an embodiment of the present disclosure, the positioning signal is configured to implement carrier phase-based positioning.

Optionally, in an embodiment of the present disclosure, obtaining the positioning signal resource corresponding to each carrier frequency may include:
configuring parameter information of the positioning signal resource corresponding to each carrier frequency, the parameter information including at least one of the followings:
a positioning signal resource ID;
a positioning signal resource set ID;
TRP ID;
transmission cycle;
slot offset;
a number of repeated transmissions within one cycle;
a time interval between every two repeated transmissions;
a number of symbols occupied;
muting pattern;
comb-size;
starting symbol position;
SCS;
QCL information;
a number of samples measured;
carrier frequency bandwidth; and
starting PRB position.

Optionally, in an embodiment of the present disclosure, the first configuring module is further configured to:
configure the parameter information of the positioning signal resource independently for each carrier frequency, wherein the parameter information of the positioning signal resource corresponding to each carrier frequency is the same or different.

Optionally, in an embodiment of the present disclosure, the first configuring module is further configured to:
configure a first part of parameter information, wherein the first parts of parameter information corresponding to at least two carrier frequencies are the same; and
configure a second part of parameter information independently for each carrier frequency, wherein the second parts of parameter information corresponding to at least two carrier frequencies are the same or different.

Optionally, in an embodiment of the present disclosure, the apparatus is further configured to:
obtain capability information reported by the UE, wherein the capability information is configured to indicate whether the UE supports simultaneous reception of positioning signals on a plurality of carrier frequencies.

Optionally, in an embodiment of the present disclosure, the first configuring module is further configured to:
configure positioning signal resources in the same time domain or different time domains for each carrier frequency when the capability information indicates that the UE supports simultaneous reception of positioning signals on a plurality of carrier frequencies; and
configure positioning signal resources in different time domains for each carrier frequency when the capability information indicates that the UE does not support simultaneous reception of positioning signals on a plurality of carrier frequencies.

Optionally, in an embodiment of the present disclosure, the sending module is further configured to:
send the positioning signal simultaneously on positioning signal resources on at least two carrier frequencies; and/or
send the positioning signal non-simultaneously on positioning signal resources on at least two carrier frequencies.

Optionally, in an embodiment of the present disclosure, the apparatus is further configured to:
configure one or more sets of measurement resources, each measurement resource including a measurement gap and/or a positioning signal processing window.

Optionally, in an embodiment of the present disclosure, the apparatus is further configured to:
configure a set of measurement resources.

Optionally, in an embodiment of the present disclosure, the apparatus is further configured to:
configure M sets of measurement resources, M being an integer greater than 1.

Optionally, in an embodiment of the present disclosure, the apparatus is further configured to:
activate one set of measurement resources in the M sets of measurement resources through signaling.

Optionally, in an embodiment of the present disclosure, the apparatus is further configured to:
activate N sets of measurement resources in the M sets of measurement resources through signaling, N being an integer greater than 1, and N being less than M.

Optionally, in an embodiment of the present disclosure, the apparatus is further configured to:
indicate a first correspondence relationship between respective carrier frequencies and respective sets of measurement gaps.

Optionally, in an embodiment of the present disclosure, the apparatus is further configured to:
configure a priority of the positioning signal on each carrier frequency within each set of positioning signal processing windows, wherein
the priority of the positioning signal includes at least one of the followings:
   the priority of the positioning signal being higher than that of the first downlink signal and the second downlink signal;
   the priority of the positioning signal being higher than that of the first downlink signal but lower than that of the second downlink signal; and
   the priority of the positioning signal being lower than that of the first downlink signal and the second downlink signal, wherein
   the second downlink signal is a downlink signal corresponding to URLLC, and the first downlink signal is a downlink signal corresponding to a non-URLLC.

Optionally, in an embodiment of the present disclosure, a set of positioning signal processing windows is correspondingly configured with at least one priority. When a set of positioning signal processing windows is correspondingly configured with a plurality of priorities, the plurality of priorities has a correspondence relationship with a plurality of carrier frequencies, and the corresponding priorities of the positioning signals on different carrier frequencies are the same or different.

Optionally, in an embodiment of the present disclosure, the priorities of the positioning signals corresponding to different sets of positioning signal processing windows may be the same or different.

Optionally, in an embodiment of the present disclosure, the apparatus is further configured to:
indicate a second correspondence relationship between respective carrier frequencies and respective sets of positioning signal processing windows.

Optionally, in an embodiment of the present disclosure, the measurement resource configured for the first part of carrier frequencies in at least two carrier frequencies is the measurement gap, and the measurement resource configured for the second part of carrier frequencies is the positioning signal processing window; or
both the measurement gap and the positioning signal processing window are configured for one carrier frequency.

Optionally, in an embodiment of the present disclosure, the positioning report may include at least one of the followings:
a number of whole cycles of phases;
a fractional part of phases less than the whole cycle;
phase error group information when the UE receives the positioning signal, the phase error group information including an ID of a phase error group and/or an error value corresponding to the phase error group;
RSRP;
AoA;
AoD;
ToA;
TDoA;
RTT;
RxTEG;
TxTEG; and
TxRxTEG

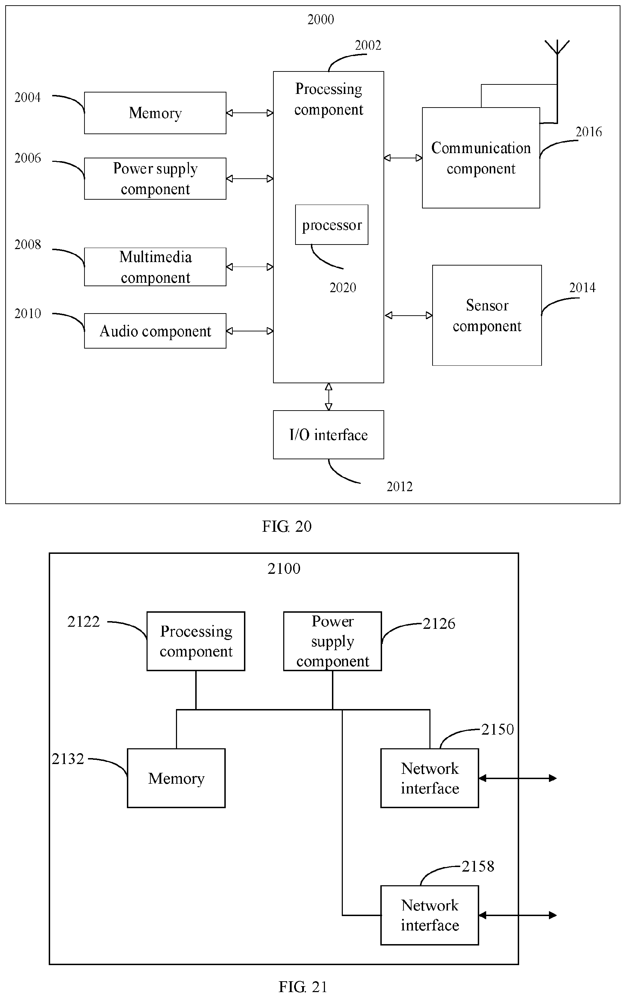

FIG 20 is a block diagram of a terminal device UE 2000 provided by an embodiment of the present disclosure. For example, the UE 2000 may be a mobile phone, a computer, a digital broadcast terminal device, a message transceiver device, a game console, a tablet device, a medical device, a fitness device, a personal digital assistant, or the like.

Referring to FIG 20, the UE 2000 may include one or more of the following components: a processing component 2002, a memory 2004, a power supply component 2006, a multimedia component 2008, an audio component 2010, an input/output (I/O) interface 2012, a sensor component 2013, and a communication component 2016.

The processing component 2002 typically controls overall operations of the UE 2000, such as the operations associated with display, telephone calls, data communications, camera operations, and recording operations. The processing component 2002 may include one or more processors 2020 to execute instructions to complete all or part of the steps in the above methods. Moreover, the processing component 2002 may include at least one module which facilitates the interaction between the processing component 2002 and other components. For instance, the processing component 2002 may include a multimedia module to facilitate the interaction between the multimedia component 2008 and the processing component 2002.

The memory 2004 is configured to store various types of data to support operations in the UE 2000. Examples of such data include instructions for any applications or methods operated on the UE 2000, contact data, phonebook data, messages, pictures, video, etc. The memory 2004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 2006 provides power to various components of the UE 2000. The power supply component 2006 may include a power management system, one or more power sources, and any other components associated with the generation, management, and distribution of power in the UE 2000.

The multimedia component 2008 includes a screen providing an output interface between the UE 2000 and a user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, slips, and gestures on the touch panel. The touch sensors may not only sense a boundary of a touch or slip action, but also sense a wake-up time and a pressure associated with the touch or slip action. In some embodiments, the multimedia component 2008 includes a front camera and/or a rear camera. The front camera and/or the rear camera may receive an external multimedia datum while the UE 2000 is in an operation mode, such as a photographing mode or a video mode. Each of the front camera and the rear camera may be a fixed optical lens system or have focus and optical zoom capability.

The audio component 2010 is configured to output and/or input audio signals. For example, the audio component 2010 includes a microphone (MIC) that is configured to receive external audio signals when the UE2000 is in operating modes such as Call Mode, Record Mode, and Speech Recognition Mode. The received audio signal may be further stored in the memory 2004 or transmitted via the communication component 2016. In some embodiments, the audio component 2010 further includes a speaker to output audio signals.

The I/O interface 2012 provides an interface between the processing component 2002 and peripheral interface modules, such as a keyboard, a click wheel, buttons, and the like. The buttons may include, but are not limited to, a home button, a volume button, a starting button, and a locking button.

The sensor component 2013 includes one or more sensors to provide status assessments of various aspects of the UE 2000. For instance, the sensor component 2013 may detect an open/closed status of the device 2000, relative positioning of components, e.g., a display and a keypad, of the UE 2000, a change in position of the UE 2000 or a component of the UE 2000, a presence or absence of user contact with the UE 2000, an orientation or an acceleration/deceleration of the UE 2000, and a change in temperature of the UE 2000. The sensor component 2013 may include a proximity sensor configured to detect the presence of nearby objects without any physical contact. The sensor component 2013 may also include a light sensor, such as a CMOS or CCD image sensor, for use in imaging applications. In some embodiments, the sensor component 2013 may also include an accelerometer sensor, a gyroscope sensor, a magnetic sensor, a pressure sensor, or a temperature sensor.

The communication component 2016 is configured to facilitate wired or wireless communication between the UE 2000 and other devices. The UE 2000 may access a wireless network based on a communication standard, such as WiFi, 2G, or 3G, or a combination thereof. In one exemplary embodiment, the communication component 2016 receives a broadcast signal or broadcast associated information from an external broadcast management system via a broadcast channel. In an exemplary embodiment, the communication component 2016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the UE 2000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

FIG 21 is a block diagram of a network side device 2100 provided by an embodiment of the present disclosure. For example, the network side device 2100 may be provided as a network side device. Referring to FIG 21, the network side device 2100 may include a processing component 2111 which further includes one or more processors, and memory resources represented by a memory 2132 for storing instructions executable by the processing component 2122, such as applications. The applications stored in the memory 2132 may include one or more modules, each corresponding to a set of instructions. In addition, the processing component 2126 is configured to execute instructions to execute any method of the above methods applied to the network side device, for example, as shown in FIG 1.

The network side device 2100 may also include a power supply component 2126 configured to perform power management for the network side device 2100, a wired or wireless network interface 2150 configured to connect the network side device 2100 to a network, and an I/O interface 2158. The network side device 2100 may operate based on an operating system stored in the memory 2132, such as Windows Server TM, Mac OS XTM, UnixTM, LinuxTM, FreeBSDTM or analogs.

In the above embodiments provided in the present disclosure, the methods provided in the embodiments of the present disclosure are introduced from the perspectives of the network side device and the UE, respectively. In order to achieve various functions in the methods provided by the embodiments of the present disclosure, the network side device and the UE may implement various functions in the form of a hardware structure, a software module, or a hardware structure and a software module. A function in the various functions may be implemented in the form of a hardware structure, a software module, or a hardware structure and a software module.

In the above embodiments provided in the present disclosure, the methods provided in the embodiments of the present disclosure are introduced from the perspectives of the network side device and the UE, respectively. In order to achieve various functions in the methods provided by the embodiments of the present disclosure, the network side device and the UE may implement various functions in the form of a hardware structure, a software module, or a hardware structure and a software module. A function in the various functions may be implemented in the form of a hardware structure, a software module, or a hardware structure and a software module.

An embodiment of the present disclosure provides a communication device. The communication device may include a transceiving module and a processing module. The transceiving module may include a sending module and/or a receiving module. The sending module is configured to implement a sending function. The receiving module is configured to implement a receiving function. The transceiving module can implement both the sending function and/or the receiving function.

The communication device may be a terminal device (e.g., the terminal device in the above method embodiment), or an apparatus in the terminal device, or an apparatus capable of matching the terminal device. Alternatively, the communication device may be a network device, or an apparatus in the network device, or an apparatus capable of matching the network device.

An embodiment of the present disclosure provides another communication device. The communication device may be a network device; or a terminal device (e.g., the terminal device in the above method embodiment); or a chip, a chip system, or a processor, etc., that supports the network device to implement the above methods; or a chip, a chip system, or a processor, etc., that supports the terminal device to implement the above methods. The apparatus may be configured to implement the methods described in the above method embodiments, and details may refer to the description in the above method embodiments.

The communication device may include one or more processors. The processor may be a general-purpose processor or a special-purpose processor, etc. For example, the processor may be a baseband processor or a central processor. The baseband processor may be configured to process a communication protocol and communication data. The central processor may be configured to control the communication device (e.g., a network side device, a baseband chip, a terminal device, a terminal device chip, DU or CU) to execute a computer program and process computer program data.

Optionally, the communication device may also include one or more memories having a computer program stored thereon. The processor executes the computer program, so that the communication device performs the methods described in the above method embodiments. Optionally, data may also be stored in the memory. The communication device and the memory may be arranged separately or integrated together.

Optionally, the communication device may further include a transceiver and an antenna. The transceiver may be referred to as a transceiving unit, a transceiving machine, or a transceiving circuit, etc., which are configured to implement a transceiving function. The transceiver may include a receiver and a sender. The receiver may be referred to as a receiving machine or a receiving circuit, etc., which are configured to implement a receiving function. The sender may be referred to as a sending machine or a sending circuit, etc., which are configured to implement a sending function.

Optionally, the communication device may include one or more interface circuits. The interface circuit is configured to receive a code instruction and transmit the code instruction to the processor. The processor is configured to run the code instruction, such that the communication device performs the methods described in the above method embodiments.

The communication device is a terminal device (e.g., the terminal device in the above method embodiment): the processor is configured to perform any of the methods shown in FIGS. 1-4.

The communication device is a network device: the transceiver is configured to perform any of the methods shown in FIGS. 5-7.

In one implementation, the processor may include a transceiver for implementing both a receiving function and a sending function. For example, the transceiver may be a transceiving circuit, or an interface, or an interface circuit. The transceiving circuit, the interface or the interface circuit which is configured to implement both the receiving function and the sending function may be arranged separately or integrated together. The transceiving circuit, the interface or the interface circuit may be configured to read and write codes/data, or may be configured to transmit or transfer a signal.

In one implementation, the processor may be configured to store a computer program therein, the computer program running on the processor to cause the communication device to perform the methods described in the above method embodiments. The computer program may be solidified in the processor, in which case the processor may be implemented by hardware.

In one implementation, the communication device may include a circuit that can implement a sending or receiving or communicating function in the above method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be fabricated using a variety of IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) or gallium arsenide (GaAs).

The communication device described in the above embodiment may be a network device or a terminal device (e.g., the terminal device in the above method embodiment), but the scope of the communication device described in the present disclosure is not limited thereto. The structure of the communication device may not be restricted. The communication device may be a stand-alone device or part of a larger device. For example, the communication device may be:
(1) a stand-alone integrated circuit IC, or chip, a chip system or a subsystem;
(2) a set with one or more ICs, and optionally, the IC set may also include a storage part for storing data and computer programs;
(3) ASIC, such as a modem;
(4) a module that may be embedded in other devices;
(5) a receiver, a terminal device, an intelligent terminal device, a cellular phone, a wireless device, a handset, a mobile unit, a vehicular device, a network device, a cloud device, an artificial intelligence device, etc.; and
(6) Others.

In the case where the communication device may be a chip or a chip system, the chip including a processor and an interface. The number of the processors may be one or more, and the number of interfaces may be multiple.

Optionally, the chip further includes a memory, the memory being configured to have stored necessary computer programs and data therein.

Those skilled in the art may also understand that various illustrative logical blocks and steps listed in the embodiments of the present disclosure may be implemented by electronic hardware, computer software, or a combination thereof. Such function being implemented in hardware or software depends on specific applications and design requirements of the entire system. Those skilled in the art may use various methods for each particular application to achieve the described functions, but such implementation should not be considered beyond the protection scope of the embodiments of the present application.

An embodiment of the present disclosure further provides a system for determining a duration of a side link. The system includes a communication device as a terminal device (e.g., a first terminal device in the above method embodiment) and a communication device as a network device in the above embodiment; or the system includes a communication device as a terminal device (e.g., the first terminal device in the above method embodiment) and a communication device as a network device in the above embodiment.

The present invention further provides a readable storage medium configured to have stored an instruction therein, the instruction, when executed by a computer, being configured to implement the functions in any of the above method embodiments.

The present disclosure further provides a computer program product configured to be executed by a computer to implement the functions in any of the above methods.

In the above embodiments, the functions may be entirely or partially implemented by software, hardware, firmware or any combination thereof. The functions may be entirely or partially implemented in the form of a computer program product while being implemented by software. The computer program product includes one or more computer programs. When the computer program is loaded and executed on a computer, a flow or function described in the embodiments of the present disclosure is generated entirely or partially. The computer may be a general-purpose computer, a special-purpose computer, a computer network, or other programmable apparatus. The computer program may be stored in a computer-readable storage medium, or transmitted from one computer-readable storage medium to another computer-readable storage medium. For example, the computer program may be transmitted from a website site, a computer, a server or a data center to another website site, computer, server or data center by means of a wired (e.g., a coaxial cable, an optical fiber, or a digital subscriber line (DSL)) or wireless (e.g., infrared, wireless, or microwave) form. The computer-readable storage medium may be any available medium that can be accessed by the computer or a data storage device such as a server or a data center, which is integrated with one or more available media. The available medium may be a magnetic medium (e.g., a floppy disk, a hard disk or a magnetic tape), an optical medium (e.g., a high-density digital video disc (DVD)), or a semiconductor medium (e.g., a solid state disk (SSD)).

A person of ordinary skill in the art may understand that "first", "second" and other numerical symbols involved in the present disclosure are distinguished only for the convenience of description, and are not used to limit the scope of the embodiments of the present disclosure, and also indicate a sequential order.

At least one of the present disclosure may also be described as one or more, and the plurality may be two, three, four, or more, without limitation in the present disclosure. In the embodiments of the present disclosure, for a technical feature, the technical features for this technical feature are distinguished by the terms "first", "second", "third", "A", "B", "C" and "D", etc., and the technical features described by "first", "second", "third", "A", "B", "C" and "D" are not in a chronological order or in a magnitude order.

Other embodiments of the present invention will be apparent to those skilled in the art from consideration of the specification and to practice the present invention herein. The present disclosure is intended to cover any variations, uses, or adaptations of the present invention, following the general principles thereof and including common knowledge or commonly used technical measures which are not disclosed herein. The specification and embodiments are to be considered as exemplary only, and the true scope and spirit of the present disclosure are indicated by the following claims.

It will be appreciated that the present disclosure is not limited to the exact construction that has been described above and illustrated in the accompanying drawings, and that various modifications and changes can be made without departing from the scope thereof. The scope of the present disclosure is only limited by the appended claims.

## Claims

1. A signal processing method, performed by a user equipment (UE), comprising:
obtaining carrier frequency information of at least two carrier frequencies configured by a network device, wherein the carrier frequency is configured to transmit a positioning signal;
obtaining a positioning signal resource corresponding to each carrier frequency configured by the network device;
measuring the positioning signal based on the positioning signal resource to obtain a positioning report; and
reporting the positioning report.

2. The method according to claim 1, wherein the carrier frequency information comprises at least one of
a serial identification (ID) of each carrier frequency;
a carrier frequency combination ID corresponding to at least two carrier frequencies;
a starting frequency point position of each carrier frequency; or
an end frequency point position of each carrier frequency.

3. The method according to claim 1, wherein the positioning signal is configured to implement carrier phase-based positioning.

4. The method according to claim 1, wherein obtaining the positioning signal resource corresponding to each carrier frequency configured by the network device comprises:
obtaining parameter information of the positioning signal resource corresponding to each carrier frequency configured by the network device, the parameter information comprising at least one of:
a positioning signal resource ID;
a positioning signal resource set ID;
a transmission-reception point (TRP) ID;
transmission cycle;
slot offset;
a number of repeated transmissions within one cycle;
a time interval between every two repeated transmissions;
a number of symbols occupied;
a muting pattern;
comb-size;
a starting symbol position;
a subcarrier spacing (SCS);
quasi co-location (QCL) information;
a number of samples measured;
a carrier frequency bandwidth; or
a starting physical resource block (PRB) position.

5. The method according to claim 4, wherein obtaining the parameter information of the positioning signal resource corresponding to each carrier frequency configured by the network device comprises:
obtaining the parameter information of the positioning signal resource independently configured by the network device for each carrier frequency, wherein the parameter information of the positioning signal resource independently configured for each carrier frequency is the same or different.

6. The method according to claim 4, wherein obtaining the parameter information of the positioning signal resource corresponding to each carrier frequency configured by the network device comprises:
obtaining a first part of parameter information configured by the network device, wherein the first parts of parameter information corresponding to the at least two carrier frequencies are the same; and
obtaining a second part of parameter information configured by the network device for each carrier frequency, wherein the second parts of the parameter information corresponding to the at least two carrier frequencies are the same or different.

7. The method according to claim 5 or 6, further comprising:
reporting capability information, wherein the capability information is configured to indicate whether the UE supports simultaneous reception of positioning signals on a plurality of carrier frequencies.

8. The method according to claim 1, further comprising:
determining one or more sets of measurement resources for the positioning signal, each measurement resource comprising a measurement gap and/or a positioning signal processing window.

9. The method according to claim 8, wherein determining the set of measurement resources for the positioning signal comprises:
obtaining a set of measurement resources configured by the network device; and
determining the configured set of measurement resources as the measurement resources for the positioning signal.

10. The method according to claim 8, wherein determining the set of measurement resources for the positioning signal comprises:
obtaining a plurality of sets of measurement resources configured by the network device;
activating one set of measurement resources in the plurality of sets of measurement resources based on a signaling sent by the network device; and
determining the activated set of measurement resources as the measurement resources for the positioning signal.

11. The method according to claim 8, wherein determining the plurality of sets of measurement resources for the positioning signal comprises:
obtaining a plurality of sets of measurement resources configured by the network device; and
determining the plurality of configured sets of measurement resources as the plurality of sets of measurement resources for the positioning signal.

12. The method according to claim 8, wherein the determining the plurality of sets of measurement resources for the positioning signal comprises:
obtaining M sets of measurement resources configured by the network device;
activating N sets of measurement resources in the M sets of measurement resources based on a signaling sent by the network device, wherein M and N are integers greater than 1, and M is greater than N; and
determining the activated N sets of measurement resources as the measurement resources for the positioning signal.

13. The method according to claim 11 or 12, wherein the measurement resources configured for a first part of carrier frequencies in the at least two carrier frequencies are measurement gaps, and the measurement resources configured for a second part of carrier frequencies in the at least two carrier frequencies are positioning signal processing windows; or
both the measurement gap and the positioning signal processing window are configured for one carrier frequency.

14. The method according to claim 9 or 10, wherein measuring the positioning signal on each carrier frequency based on the positioning signal resources comprises:
measuring positioning signals on different carrier frequencies within a single gap duration in the set of measurement gaps.

15. The method according to claim 9 or 10, wherein measuring the positioning signal on each carrier frequency based on the positioning signal resources comprises:
measuring positioning signals on different carrier frequencies within different gap durations in the set of measurement gaps.

16. The method according to claim 9 or 10, further comprising:
obtaining a priority of the positioning signal configured by the network device on the carrier frequency within the set of positioning signal processing windows, wherein
the priority of the positioning signal comprises at least one of:
the priority of the positioning signal being higher than that of a first downlink signal and a second downlink signal;
the priority of the positioning signaling being higher than that of a first downlink signal but lower than that of a second downlink signal; and
the priority of the positioning signal being lower than that of a first downlink signal and a second downlink signal, wherein
the second downlink signal is a downlink signal corresponding to ultra-reliable low latency communication (URLLC), and the first downlink signal is a downlink signal corresponding to a non-URLLC.

17. The method according to claim 16, wherein the set of positioning signal processing windows is correspondingly configured with at least one priority; if the set of positioning signal processing windows is correspondingly configured with a plurality of priorities, the plurality of priorities has a correspondence relationship with a plurality of carrier frequencies; and the corresponding priorities of the positioning signals on different carrier frequencies are the same or different.

18. The method according to claim 16, wherein measuring the positioning signal based on the positioning signal resources comprises:
measuring positioning signals on different carrier frequencies based on the priorities of the positioning signals within one window in the set of positioning signal processing windows.

19. The method according to claim 16, wherein measuring the positioning signal based on the positioning signal resources comprises:
measuring positioning signals on different carrier frequencies based on the priorities of the positioning signals within different windows in the set of positioning signal processing windows.

20. The method according to claim 11 or 12, further comprising:
obtaining a first correspondence relationship between respective carrier frequencies and respective sets of measurement gaps indicated by the network device.

21. The method according to claim 20, wherein measuring the positioning signal based on the positioning signal resources comprises:
measuring the positioning signal on the corresponding carrier frequency based on the first correspondence relationship within gap durations of each set of measurement gaps.

22. The method according to claim 11 or 12, further comprising:
obtaining a second correspondence relationship between respective carrier frequencies and respective sets of positioning signal processing windows indicated by the network device.

23. The method according to claim 22, further comprising:
obtaining a priority of the positioning signal configured by the network device on each carrier frequency within each set of the positioning signal processing windows, wherein
the priority of the positioning signal comprises at least one of the followings:
the priority of the positioning signal being higher than that of a first downlink signal and a second downlink signal;
the priority of the positioning signal being higher than that of the first downlink signal but lower than that of the second downlink signal; and
the priority of the positioning signal being lower than that of the first downlink signal and the second downlink signal, wherein
the second downlink signal is a downlink signal corresponding to URLLC, and the first downlink signal is a downlink signal corresponding to a non-URLLC, wherein
the priorities of the positioning signal in different sets of positioning signal processing windows are the same or different.

24. The method according to claim 23, wherein measuring the positioning signal based on the positioning signal resources comprises:
measuring the positioning signal on the corresponding carrier frequency based on the second correspondence relationship and the priority of the positioning signal corresponding to each set of positioning signal processing windows within a window duration in each set of measurement positioning signal processing windows.

25. The method according to claim 1, wherein the positioning report comprises at least one of
a number of whole cycles of phases;
a fractional part of phases less than the whole cycle;
phase error group information when the UE receives the positioning signal, the phase error group information comprising an ID of a phase error group and/or an error value corresponding to the phase error group;
reference signal receiving power (RSRP);
angle of arrival (AoA);
angle of departure (AoD);
time of arrival (ToA);
time difference of arrival (TDoA);
round trip time (RTT);
receive time error group (RxTEG);
transmit time error group (TxTEG); and
transmit-receive time error group (TxRxTEG).

26. A signal processing method, performed by a network device, comprising:
configuring carrier frequency information of at least two carrier frequencies, wherein the carrier frequency is configured to transmit a positioning signal; and
configuring the positioning signal resource corresponding to each carrier frequency.

27. The method according to claim 26, further comprising:
sending a positioning signal on the positioning signal resource; and
receiving a positioning report sent by UE.

28. The method according to claim 26, wherein the carrier frequency information comprises at least one of:
a serial identification (ID) of each carrier frequency;
a carrier frequency combination ID corresponding to at least two carrier frequencies;
a starting frequency point position of each carrier frequency; or
an end frequency point position of each carrier frequency.

29. The method according to claim 26, wherein the positioning signal is configured to implement carrier phase-based positioning.

30. The method according to claim 26, wherein configuring the positioning signal resource corresponding to each carrier frequency comprises:
configuring parameter information of the positioning signal resource corresponding to each carrier frequency, the parameter information comprising at least one of:
a positioning signal resource ID;
a positioning signal resource set ID;
a transmission-reception point (TRP) ID;
transmission cycle;
slot offset;
a number of repeated transmissions within one cycle;
a time interval between every two repeated transmissions;
a number of symbols occupied;
a muting pattern;
comb-size;
a starting symbol position;
a subcarrier spacing (SCS);
quasi co-location (QCL) information;
a number of samples measured;
a carrier frequency bandwidth; or
a starting physical resource block (PRB) position.

31. The method according to claim 30, wherein configuring the positioning signal resource corresponding to each carrier frequency comprises:
configuring the parameter information of the positioning signal resource independently for each carrier frequency, wherein the parameter information of the positioning signal resource corresponding to each carrier frequency are the same or different.

32. The method according to claim 30, wherein configuring the positioning signal resource corresponding to each carrier frequency comprises:
configuring a first part of parameter information, wherein the first parts of parameter information corresponding to at least two carrier frequencies are the same; and
configuring a second part of parameter information independently for each carrier frequency, wherein the second parts of parameter information corresponding to at least two carrier frequencies are the same or different.

33. The method according to claim 27, further comprising:
obtaining capability information reported by the UE, wherein the capability information is configured to indicate whether the UE supports simultaneous reception of positioning signals on a plurality of carrier frequencies.

34. The method according to claim 33, wherein configuring the positioning signal resource corresponding to each carrier frequency comprises:
configuring positioning signal resources in the same time domain or different time domains for each carrier frequency when the capability information indicates that the UE supports simultaneous reception of positioning signals on a plurality of carrier frequencies; and
configuring positioning signal resources in different time domains for each carrier frequency when the capability information indicates that the UE does not support simultaneous reception of positioning signals on a plurality of carrier frequencies.

35. The method according to claim 33, wherein sending the positioning signal based on the positioning signal resources comprises:
sending positioning signals simultaneously on positioning signal resources on at least two carrier frequencies; and/or
sending positioning signals non-simultaneously on positioning signal resources on at least two carrier frequencies.

36. The method according to claim 26, further comprising:
configuring one or more sets of measurement resources, each measurement resource comprising a measurement gap and/or a positioning signal processing window.

37. The method according to claim 36, wherein configuring one or more sets of measurement resources comprises:
configuring a set of measurement resources.

38. The method according to claim 36, wherein configuring one or more sets of measurement resources comprises:
configuring M sets of measurement resources, wherein M is an integer greater than 1.

39. The method according to claim 38, further comprising:
activating one set of measurement resources in the M sets of measurement resources through a signaling.

40. The method according to claim 38, further comprising:
activating N sets of measurement resources in the M sets of measurement resources through a signaling, wherein N is an integer greater than 1, and N is less than M.

41. The method according to claim 38 or 40, further comprising:
indicating a first correspondence relationship between respective carrier frequencies and respective sets of measurement gaps.

42. The method according to any one of claims 36 to 40, further comprising:
configuring a priority of the positioning signal on each carrier frequency within each set of positioning signal processing windows, wherein
the priority of the positioning signal comprises at least one of:
the priority of the positioning signal being higher than that of a first downlink signal and a second downlink signal;
the priority of the positioning signal being higher than that of the first downlink signal but lower than that of the second downlink signal; and
the priority of the positioning signal being lower than that of the first downlink signal and the second downlink signal, wherein
the second downlink signal is a downlink signal corresponding to URLLC, and the first downlink signal is a downlink signal corresponding to a non-URLLC.

43. The method according to claim 42, wherein the set of positioning signal processing windows is correspondingly configured with at least one priority; if the set of positioning signal processing windows is correspondingly configured with a plurality of priorities, the plurality of priorities has a correspondence relationship with a plurality of carrier frequencies; and the corresponding priorities of the positioning signals on different carrier frequencies are the same or different.

44. The method according to claim 42, wherein the priorities of the positioning signals corresponding to different sets of positioning signal processing windows are the same or different.

45. The method according to claim 42, further comprising:
indicating a second correspondence relationship between respective carrier frequencies and respective sets of positioning signal processing windows.

46. The method according to claim 38 or 40, wherein the measurement resources configured for a first part of carrier frequencies in the at least two carrier frequencies are measurement gaps, and the measurement resources configured for a second part of carrier frequencies are positioning signal processing windows; or
both the measurement gap and the positioning signal processing window are configured for one carrier frequency.

47. The method according to claim 27, wherein the positioning report comprises at least one of:
a number of whole cycles of phases;
a fractional part of phases less than the whole cycle;
phase error group information when the UE receives the positioning signal, the phase error group information comprising an ID of a phase error group and/or an error value corresponding to the phase error group;
RSRP;
AoA;
AoD;
ToA;
TDoA;
RTT;
RxTEG;
TxTEG; and
TxRxTEG

48. A signal processing apparatus, comprising:
a first obtaining module, configured to obtain carrier frequency information of at least two carrier frequencies configured by a network device, wherein the carrier frequency is configured to transmit a positioning signal;
a second obtaining module, configured to obtain a positioning signal resource corresponding to each carrier frequency configured by the network device;
a processing module, configured to measure the positioning signal based on the positioning signal resource to obtain a positioning report; and
a reporting module, configured to report the positioning report.

49. A signal processing apparatus, comprising:
a first configuring module, configured to configure carrier frequency information of at least two carrier frequencies, wherein the carrier frequency is configured to transmit a positioning signal; and
a second configuring module, configured to configure a positioning signal resource corresponding to each carrier frequency.

50. A communication device, comprising a processor and a memory, wherein the memory is configured to store a computer program, and the processor is configured to execute the computer program stored in the memory, such that the device performs the method according to any one of claims 1 to 25.

51. A communication device, comprising a processor and a memory, wherein the memory is configured to store a computer program, and the processor is configured to execute the computer program stored in the memory, such that the device performs the method according to any one of claims 26 to 47.

52. A communication device, comprising a processor and an interface circuit, wherein
the interface circuit is configured to receive code instructions and transmit the code instructions to the processor; and
the processor is configured to run the code instructions to perform the method according to any one of claims 1 to 25.

53. A communication device, comprising a processor and an interface circuit, wherein
the interface circuit is configured to receive code instructions and transmit the code instructions to the processor; and
the processor is configured to run the code instructions to perform the method according to any one of claims 26 to 47.

54. A computer-readable storage medium, configured to store instructions, which when being executed, cause the method according to any one of claims 1 to 25 to be implemented.

55. A computer-readable storage medium, configured to store instructions, which when being executed, cause the method according to any one of claims 26 to 47 to be implemented.
